# EUROPEAN PATENT APPLICATION

(11) **EP 4 773 578 A1**
(43) Date of publication of application: **08.07.2026**
(21) Application number: 24882950.9
(22) Date of filing: 10.10.2024
(51) Int. Cl.: H04L 67/125, G06K 19/06, H04L 9/40, H04L 67/303, H04L 12/28, H04W 84/12, H04W 4/80, G16Y 10/75, G16Y 40/10

(54) **ELECTRONIC DEVICE FOR CONTROLLING INTERNET-OF-THINGS DEVICE, AND STORAGE MEDIUM THEREFOR**

(30) Priority: 23.10.2023 KR 20230141920; 08.11.2023 KR 20230153891
(71) Applicant: Samsung Electronics Co., Ltd., Suwon-si, Gyeonggi-do 16677 (KR)
(72) Inventor: LEE, Kanghee, Suwon-si, Gyeonggi-do 16677 (KR); KIM, Seokhyun, Suwon-si, Gyeonggi-do 16677 (KR); JEONG, Kyungho, Suwon-si, Gyeonggi-do 16677 (KR)
(74) Representative: Gulde & Partner
(86) International application number: PCT/KR2024/096296
(87) International publication number: WO 2025/089924

(57) **Abstract**

Disclosed are an electronic device for controlling an Internet-of-things (IoT) device and a storage medium thereof. This electronic device may comprise a camera, a communication circuit, at least one processor, and a memory for storing instructions. The instructions may cause the electronic device to: obtain a machine-readable code related to an IoT device through the camera; determine whether the IoT device supports designated fast onboarding on the basis of device information of the IoT device obtained on the basis of the machine-readable code; encrypt connection information used by the IoT device to connect to a network if the IoT device supports the fast onboarding, thereby generating encrypted data; broadcast at least one packet including the device information and the encrypted data; and operate the electronic device in a scan mode in order to receive an ADV packet broadcast from the IoT device if the IoT device does not support the fast onboarding.

## Description

### [Technical Field]

Embodiments of the disclosure relate to an electronic device for controlling an Internet over things (IoT) device, and a storage medium therefor.

### [Background Art]

Various services and additional features provided through a user terminal, for example, an electronic device such as a smartphone, are gradually increasing. In order to increase the utility value of such electronic devices and to satisfy the diverse desires of users, communication service providers or electronic device manufacturers are competitively developing electronic devices that provide various functions. Accordingly, various functions provided through the electronic device are becoming increasingly advanced.

As wireless communication technology develops, devices using artificial intelligence (AI) are being widely introduced. For example, home appliances connected to a network by applying Internet of things (IoT) technology may use artificial intelligence. IoT technology may collect and analyze data generated by devices, and provide intelligent Internet technology services that create new values for human lives. By combining and integrating existing Internet technologies with various industries, IoT technology may be applied to areas such as smart homes, smart buildings, smart cities, smart cars, and smart home appliances.

In addition, various home appliances for the convenience of a user are installed in a home. Various services have been proposed to make it more convenient to operate or control home appliances by using IoT technology. Home network technology may provide various services using a home network to users in a home. For example, users may control various controlled devices (e.g., home appliances to which IoT technology is applied) that constitute a home network by using a personal electronic device (e.g., a smartphone). Users may desire to receive various services for controlling the controlled devices. Accordingly, there is a demand for the development of various technologies for managing the controlled devices in accordance with the users' intentions.

To control controlled devices (e.g., televisions (TV), air conditioners, air purifiers, washing machines, security cameras, lighting devices, or switches), a user may onboard the controlled devices by using an electronic device (e.g., a smartphone or a wearable device) owned by the user. The electronic devices may connect the controlled device to a user account by controlling the controlled device to be registered (e.g., signed up and signed in) with a server. The electronic device may access the server via a client application, based on the user account, and control the controlled devices according to a user input.

### [Detailed Description of the Invention]

### [Technical Solution]

Embodiments of the disclosure may provide an electronic device for controlling IoT devices, and a storage medium therefor.

Embodiments of the disclosure may provide an electronic device for onboarding an IoT device, and a storage medium therefor.

Embodiments of the disclosure may provide an electronic device for quickly and simply performing onboarding of multiple IoT devices, and a storage medium therefor.

The technical subjects pursued in the disclosure are not limited to the above-mentioned technical subjects, and other technical subjects which are not mentioned herein may be clearly understood from the following description by those skilled in the art to which the disclosure pertains.

An electronic device according to an embodiment of the disclosure may include a camera, a communication circuit, at least one processor functionally connected to the camera and the communication circuit, and memory configured to store instructions. The instructions, when executed individually or collectively by the at least one processor, may cause the electronic device to obtain a machine-readable code related to an external electronic device 320 via the camera. The instructions, when executed individually or collectively by the at least one processor, may cause the electronic device to determine whether the external electronic device supports specified fast onboarding, based on device information of the external electronic device obtained based on the machine-readable code. The instructions, when executed individually or collectively by the at least one processor, may cause the electronic device to, in case that the external electronic device supports the fast onboarding, generate encrypted data by encrypting connection information used to connect the external electronic device to a network with a specified encryption key. The instructions, when executed individually or collectively by the at least one processor, may cause the electronic device to broadcast, via the communication circuit, at least one packet including the device information and the encrypted data. The instructions, when executed individually or collectively by the at least one processor, may cause the electronic device to, in case that the external electronic device does not support the fast onboarding, operate in a scan mode to receive an advertising (ADV) packet broadcast from the external electronic device.

An IoT device according to an embodiment of the disclosure may include a communication circuit, at least one processor functionally connected to the communication circuit, and memory configured to store instructions. The instructions, when executed individually or collectively by the at least one processor, may cause the IoT device to: activate a device-to-device (D2D) function of the communication circuit; receive at least one packet broadcast from an external electronic device via the communication circuit in a scan mode; determine whether device information included in the at least one packet matches device information of the IoT device; in case that the device information included in the at least one packet matches the device information of the IoT device, decrypt encrypted data included in the at least one packet with a specified encryption key to obtain connection information; based on the obtained connection information, perform an onboarding procedure for a server; and in case that the device information included in the at least one packet does not match the device information of the IoT device, ignore at least one ADV packet.

According to an embodiment of the disclosure, in a non-transitory computer-readable storage medium storing at least one program, the at least one program may include instructions configured to, when executed individually or collectively by at least one processor of an electronic device, cause the electronic device to: obtain a machine-readable code related to an external electronic device via a camera; determine whether the external electronic device supports specified fast onboarding, based on device information of the external electronic device obtained based on the machine-readable code; in case that the external electronic device supports the fast onboarding, generate encrypted data by encrypting connection information used to connect the external electronic device to a network with a specified encryption key; broadcast at least one packet including the device information and the encrypted data; and in case that the external electronic device does not support the fast onboarding, operate in a scan mode to receive an advertising (ADV) packet broadcast from the external electronic device.

According to an embodiment of the disclosure, in a non-transitory computer-readable storage medium storing at least one program, the at least one program may include instructions configured to, when executed individually or collectively by at least one processor of an IoT device, cause the IoT device to: activate a device-to-device (D2D) function of the IoT device; receive at least one packet broadcast from an external electronic device in a scan mode; determine whether device information included in the at least one packet matches device information of the IoT device; in case that the device information included in the at least one packet matches the device information of the IoT device, decrypt encrypted data included in the at least one packet with a specified encryption key to obtain connection information; based on the obtained connection information, perform an onboarding procedure for a server; and in case that the device information included in the at least one packet does not match the device information of the IoT device, ignore the at least one ADV packet.

### [Brief Description of Drawings]

FIG. 1 illustrates an Internet of things (IoT) system according to various embodiments.
FIG. 2 is a block diagram illustrating an electronic device in a network environment according to various embodiments.
FIG. 3 is a diagram for illustrating a network including controlled devices according to an embodiment of the disclosure.
FIG. 4A is a block diagram illustrating the configuration of an electronic device that performs IoT control according to an embodiment of the disclosure.
FIG. 4B is a block diagram illustrating the configuration of an IoT device performing onboarding according to an embodiment of the disclosure.
FIG. 5 is a flowchart illustrating operations of an electronic device according to an embodiment of the disclosure.
FIG. 6 is a flowchart illustrating operations of an IoT device according to an embodiment of the disclosure.
FIG. 7 is a diagram illustrating an onboarding procedure via a D2D connection according to an embodiment of the disclosure.
FIG. 8 illustrates a sequence diagram illustrating sequential onboarding of multiple devices according to an embodiment of the disclosure.
FIG. 9 is a diagram illustrating an onboarding procedure that does not use a D2D connection according to an embodiment of the disclosure.
FIG. 10 is a sequence diagram illustrating parallel onboarding of multiple devices according to an embodiment of the disclosure.
FIG. 11 is a sequence diagram illustrating simultaneous onboarding of multiple devices according to an embodiment of the disclosure.
FIGS. 12A, 12B, 12C, 12D, and 12E are diagrams each illustrating a user interface of a procedure for adding an IoT device according to an embodiment of the disclosure.
FIGS. 13A, 13B, 13C, and 13D are diagrams each illustrating a user interface for a procedure for adding an IoT device based on a beep sound according to an embodiment of the disclosure.
FIGS. 14A, 14B, 14C, and 14D are diagrams each illustrating a user interface for a procedure for adding an IoT device based on reception confirmation information according to an embodiment of the disclosure.
FIGS. 15A, 15B, 15C, 15D, 15E, and 15F are diagrams each illustrating a user interface for a procedure for adding multiple IoT devices according to an embodiment of the disclosure.

### [Mode for Carrying out the Invention]

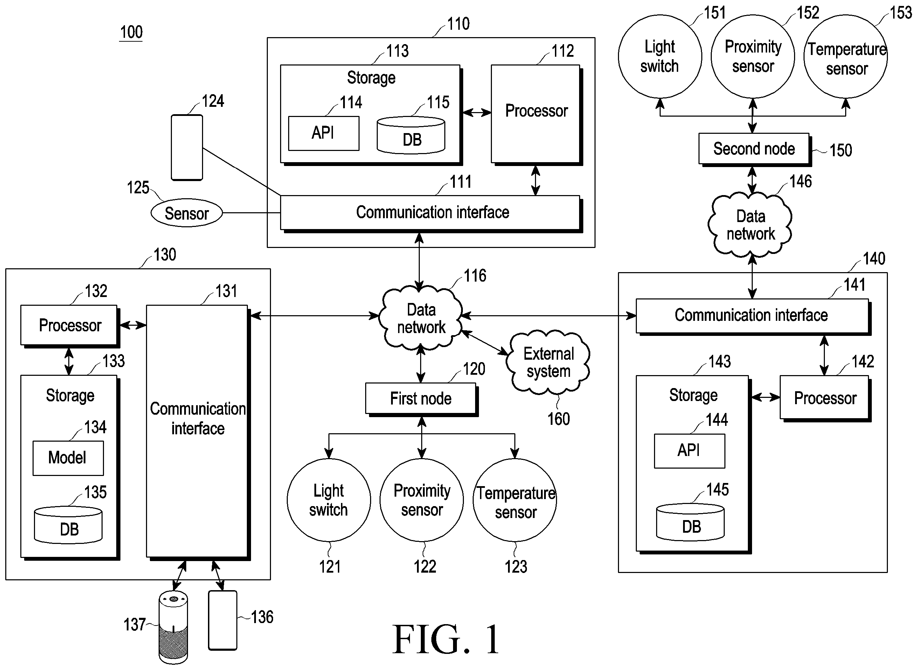

FIG. 1 illustrates an Internet of things (IoT) system 100 according to various embodiments. However, at least some of the components in FIG. 1 may be omitted, and components not illustrated may be further included.

Referring to FIG. 1, the IoT system 100 according to an embodiment includes multiple electronic devices connectable to a data network 116 or 146. For example, the IoT system 100 may include at least one of a first IoT server 110, a first node 120, a voice assistance server 130, a second IoT server 140, a second node 150, or devices 121, 122, 123, 124, 125, 136, 137, 151, 152, and 153.

According to an embodiment, the first IoT server 110 may include at least one of a communication interface 111, a processor 112, or a storage unit 113. The second IoT server 140 may include at least one of a communication interface 141, a processor 142, or a storage unit 143. Herein, the "IoT server" may, for example, based on a data network (e.g., the data network 116 or the data network 146), remotely control and/or monitor one or more devices (e.g., the devices 121, 122, 123, 124, 125, 151, 152, and 153) via a relay device (e.g., the first node 120 or the second node 150), or directly without a relay device. As used herein, a "device" may be, for example, a sensor, a home appliance, an office electronic device, or a device for performing a process, which is disposed (or located) in a local environment, such as a home, an office, a factory, a building, an external site, or another type of premises, and there is no limitation on the type thereof. A device that receives a control command and performs an operation corresponding to the control command may be referred to as a "target device." The IoT server may be referred to as a central server in that the IoT server selects a target device from among multiple devices and provides a control command.

According to an embodiment, the first IoT server 110 may perform communication with the devices 121, 122, and 123 through the data network 116. The data network 116 may mean, for example, the Internet or a network for long-range communication such as a computer network (e.g., a LAN or a WAN), and may also include a cellular network.

According to an embodiment, the first IoT server 110 may be connected to the data network 116 through the communication interface 111. The communication interface 111 may include a communication device (or a communication module) for supporting communication of the data network 116, and may be integrated as a single component (e.g., a single chip), or implemented as multiple separate components (e.g., multiple chips). The first IoT server 110 may communicate with the devices 121, 122, and 123 via the first node 120. The first node 120 may receive data from the first IoT server 110 via the data network 116, and may transmit the received data to at least some of the devices 121, 122, and 123. Alternatively, the first node 120 may receive data from at least some of the devices 121, 122, and 123, and transmit the received data to the first IoT server 110 via the data network 116. The first node 120 may function as a bridge between the data network 116 and the devices 121, 122, and 123. Although one first node 120 is illustrated in FIG. 1, this is merely exemplary, and the number thereof is not limited.

Herein, a "node" may be an edge computing system or a hub device. According to an embodiment, the first node 120 may support wired and/or wireless communication in the data network 116, and may also support wired and/or wireless communication with the devices 121, 122, and 123. For example, the first node 120 may be connected to the devices 121, 122, and 123 through a short-range communication network such as at least one of Bluetooth, Wi-Fi, Wi-Fi direct, Z-wave, Zigbee, INSETEON, X10, and infrared data association (IrDA), but the communication type is not limited. The first node 120 may be disposed (or located) in an environment such as, for example, a home, an office, a factory, a building, an external site, or other types of premises. Accordingly, the devices 121, 122, and 123 may be monitored and/or controlled by a service provided by the first IoT server 110, and the devices 121, 122, and 123 may not be required to have full network communication (e.g., Internet communication) capability for direct connection to the first IoT server 110. The devices 121, 122, and 123 are illustrated as electronic devices implemented in a home environment, such as a light switch, a proximity sensor, and a temperature sensor, but this is exemplary, and the disclosure is not limited thereto.

According to an embodiment, the first IoT server 110 may support direct communication with the devices 124 and 125. Here, "direct communication" may refer to communication without, for example, a relay device such as the first node 120, and may mean, for example, communication via a cellular communication network and/or a data network.

According to an embodiment, the first IoT server 110 may transmit a control command to at least some of the devices 121, 122, 123, 124, and 125. Here, a "control command" may refer to data that causes a controllable device to perform a specific operation, and the specific operation may be an operation performed by the device, and may include output of information, sensing of information, reporting of information, and management (e.g., deletion or generation) of information, and the type thereof is not limited. For example, the processor 112 may obtain information (or a request) for generating a control command from the outside (e.g., at least some of the voice assistance server 130, the second IoT server 140, an external system 160, or the devices 121, 122, 123, 124, and 125), and may generate a control command based on the obtained information. Alternatively, the processor 112 may generate a control command, based on a result of monitoring at least some of the devices 121, 122, 123, 124, and 125 satisfying a specified condition. The processor 112 may control the communication interface 111 to transmit the control command to a target device.

According to an embodiment, the processor 112, the processor 132, or the processor 142 may be implemented as a combination of one or more of a general-purpose processor, such as a central processing unit (CPU), a digital signal processor (DSP), an application processor (AP), or a communication processor (CP), a graphics-dedicated processor such as a graphics processing unit (GPU) or a vision processing unit (VPU), or an artificial intelligence-dedicated processor such as a neural processing unit (NPU). The above-described processing unit is merely an example, and it is to be understood by those skilled in the art that the processor 112 may be any arithmetic unit capable of executing instructions stored in the memory 113 and outputting a result of the execution, and there is no limit thereto.

According to an embodiment, the processor 112 may configure a web-based interface, based on an application programmable interface (API) 114, or may expose resources managed by the first IoT server 110 to the outside. The web-based interface may support, for example, communication between the first IoT server 110 and an external web service. The processor 112 may, for example, permit the external system 160 to control and/or access the devices 121, 122, and 123. The external system 160 may be, for example, an independent system not associated with the system 100 or not part thereof. The external system 160 may be, for example, an external server or a website. However, security is required for access by the external system 160 to the devices 121, 122, and 123 or to the resources of the first IoT server 110. According to an embodiment, the processor 112 may expose, to the outside, an API endpoint (e.g., a universal resource locator (URL)) based on the API 114 for an automation application. According to the above description, the first IoT server 110 may transfer a control command to a target device among the devices 121, 122, and 123. Meanwhile, a description of the communication interface 141, the processor 142, and an API 144 and a database 145 of the storage unit 143 in the second IoT server 140 may be substantially the same as a description of the communication interface 111, the processor 112, and the API 114 and a database 115 of the storage unit 113 in the first IoT server 110. In addition, a description of the second node 150 may be substantially the same as the description of the first node 120. The second IoT server 140 may transfer a control command to a target device among the devices 151, 152, and 153. The first IoT server 110 and the second IoT server 140 may be operated by the same service provider in an embodiment, but may be respectively operated by different service providers in another embodiment.

According to an embodiment, the voice assistance server 130 may transmit or receive data to or from the first IoT server 110 via the data network 116. The voice assistance server 130 according to an embodiment may include at least one of a communication interface 131, a processor 132, or a storage unit 133. The communication interface 131 may communicate with a smartphone 136 or an AI speaker 137 through a data network (not illustrated) and/or a cellular network (not illustrated). The smartphone 136 or the AI speaker 137 may include a microphone, may acquire a user voice, may convert the user voice into a voice signal, and may transmit the voice signal to the voice assistant server 130. The processor 132 may receive the voice signal from the smartphone 136 or the AI speaker 137 via the communication interface 131. The processor 132 may process the received voice signal, based on a stored model 134. The processor 132 may generate (or identify) a control command by using the processing result, based on information stored in the database 135. According to an embodiment, the storage unit 113, 133, or 143 may include at least one type of non-transitory storage medium among flash memory type, hard disk type, multimedia card micro type, or card-type memory (e.g., SD or XD memory), random access memory (RAM), static random access memory (SRAM), read-only memory (ROM), electrically erasable programmable read-only memory (EEPROM), programmable read-only memory (PROM), magnetic memory, a magnetic disk, or an optical disk, and the type thereof is not limited.

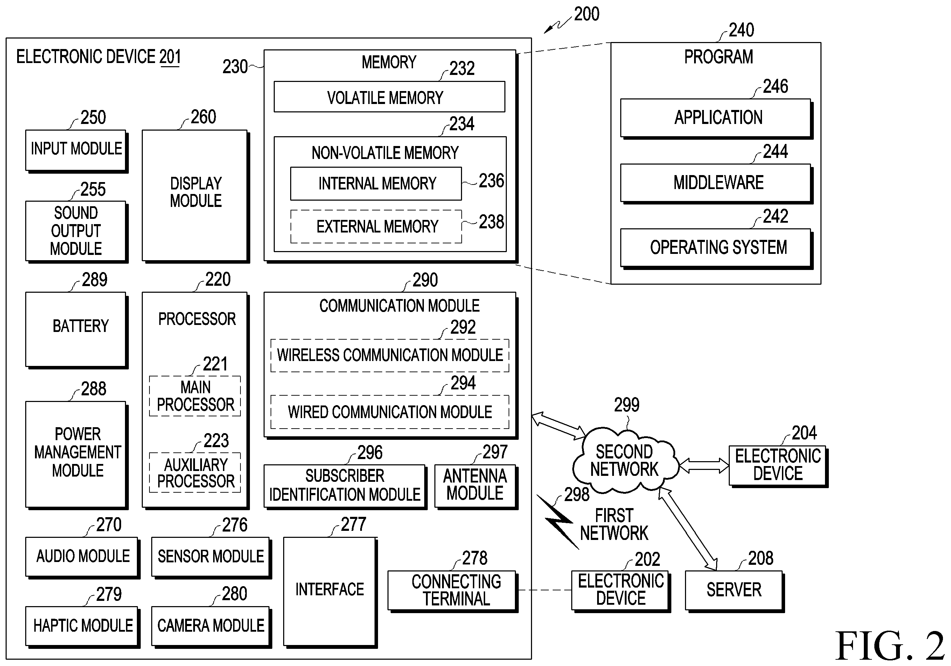

In various embodiments, at least one device (e.g., the device 124) that communicates with the first IoT server 110 may be a smartphone (e.g., the electronic device 201 in FIG. 2) in a network environment.

FIG. 2 is a block diagram illustrating an electronic device 201 in a network environment 200 according to various embodiments.

Referring to FIG. 2, the electronic device 201 in the network environment 200 may communicate with an electronic device 202 via a first network 298 (e.g., a short-range wireless communication network), or at least one of an electronic device 204 or a server 208 via a second network 299 (e.g., a long-range wireless communication network). According to an embodiment, the electronic device 201 may communicate with the electronic device 204 via the server 208. According to an embodiment, the electronic device 201 may include a processor 220, memory 230, an input module 250, a sound output module 255, a display module 260, an audio module 270, a sensor module 276, an interface 277, a connecting terminal 278, a haptic module 279, a camera module 280, a power management module 288, a battery 289, a communication module 290, a subscriber identification module (SIM) 296, or an antenna module 297. In some embodiments, at least one of the components (e.g., the connecting terminal 278) may be omitted from the electronic device 201, or one or more other components may be added in the electronic device 201. In some embodiments, some of the components (e.g., the sensor module 276, the camera module 280, or the antenna module 297) may be implemented as a single component (e.g., the display module 260).

The processor 220 may execute, for example, software (e.g., a program 240) to control at least one other component (e.g., a hardware or software component) of the electronic device 201 coupled with the processor 220, and may perform various data processing or computation. According to one embodiment, as at least part of the data processing or computation, the processor 220 may store a command or data received from another component (e.g., the sensor module 276 or the communication module 290) in volatile memory 232, process the command or the data stored in the volatile memory 232, and store resulting data in non-volatile memory 234. According to an embodiment, the processor 220 may include a main processor 221 (e.g., a central processing unit (CPU) or an application processor (AP)), or an auxiliary processor 223 (e.g., a graphics processing unit (GPU), a neural processing unit (NPU), an image signal processor (ISP), a sensor hub processor, or a communication processor (CP)) that is operable independently from, or in conjunction with, the main processor 221. For example, when the electronic device 201 includes the main processor 221 and the auxiliary processor 223, the auxiliary processor 223 may be adapted to consume less power than the main processor 221, or to be specific to a specified function. The auxiliary processor 223 may be implemented as separate from, or as part of the main processor 221.

The auxiliary processor 223 may control at least some of functions or states related to at least one component (e.g., the display module 260, the sensor module 276, or the communication module 290) among the components of the electronic device 201, instead of the main processor 221 while the main processor 221 is in an inactive (e.g., sleep) state, or together with the main processor 221 while the main processor 221 is in an active state (e.g., executing an application). According to an embodiment, the auxiliary processor 223 (e.g., an image signal processor or a communication processor) may be implemented as part of another component (e.g., the camera module 280 or the communication module 290) functionally related to the auxiliary processor 223. According to an embodiment, the auxiliary processor 223 (e.g., the neural processing unit) may include a hardware structure specified for artificial intelligence model processing. An artificial intelligence model may be generated by machine learning. Such learning may be performed, e.g., by the electronic device 201 where the artificial intelligence is performed or via a separate server (e.g., the server 208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 230 may store various data used by at least one component (e.g., the processor 220 or the sensor module 276) of the electronic device 201. The various data may include, for example, software (e.g., the program 240) and input data or output data for a command related thereto. The memory 230 may include the volatile memory 232 or the non-volatile memory 234.

The program 240 may be stored in the memory 230 as software, and may include, for example, an operating system (OS) 242, middleware 244, or an application 246.

The input module 250 may receive a command or data to be used by another component (e.g., the processor 220) of the electronic device 201, from the outside (e.g., a user) of the electronic device 201. The input module 250 may include, for example, a microphone, a mouse, a keyboard, a key (e.g., a button), or a digital pen (e.g., a stylus pen).

The sound output module 255 may output sound signals to the outside of the electronic device 201. The sound output module 255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 260 may visually provide information to the outside (e.g., a user) of the electronic device 201. The display module 260 may include, for example, a display, a hologram device, or a projector and control circuitry to control a corresponding one of the display, hologram device, and projector. According to an embodiment, the display module 260 may include a touch sensor adapted to detect a touch, or a pressure sensor adapted to measure the intensity of force incurred by the touch.

The audio module 270 may convert a sound into an electrical signal and vice versa. According to an embodiment, the audio module 270 may obtain the sound via the input module 250, or output the sound via the sound output module 255 or a headphone of an external electronic device (e.g., an electronic device 202) directly (e.g., wiredly) or wirelessly coupled with the electronic device 201.

The sensor module 276 may detect an operational state (e.g., power or temperature) of the electronic device 201 or an environmental state (e.g., a state of a user) external to the electronic device 201, and then generate an electrical signal or data value corresponding to the detected state. According to an embodiment, the sensor module 276 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 277 may support one or more specified protocols to be used for the electronic device 201 to be coupled with the external electronic device (e.g., the electronic device 202) directly (e.g., wiredly) or wirelessly. According to an embodiment, the interface 277 may include, for example, a high definition multimedia interface (HDMI), a universal serial bus (USB) interface, a secure digital (SD) card interface, or an audio interface.

A connecting terminal 278 may include a connector via which the electronic device 201 may be physically connected with the external electronic device (e.g., the electronic device 202). According to an embodiment, the connecting terminal 278 may include, for example, a HDMI connector, a USB connector, a SD card connector, or an audio connector (e.g., a headphone connector).

The haptic module 279 may convert an electrical signal into a mechanical stimulus (e.g., a vibration or a movement) or electrical stimulus which may be recognized by a user via his tactile sensation or kinesthetic sensation. According to an embodiment, the haptic module 279 may include, for example, a motor, a piezoelectric element, or an electric stimulator.

The camera module 280 may capture a still image or moving images. According to an embodiment, the camera module 280 may include one or more lenses, image sensors, image signal processors, or flashes.

The power management module 288 may manage power supplied to the electronic device 201. According to one embodiment, the power management module 288 may be implemented as at least part of, for example, a power management integrated circuit (PMIC).

The battery 289 may supply power to at least one component of the electronic device 201. According to an embodiment, the battery 289 may include, for example, a primary cell which is not rechargeable, a secondary cell which is rechargeable, or a fuel cell.

The communication module 290 may support establishing a direct (e.g., wired) communication channel or a wireless communication channel between the electronic device 201 and the external electronic device (e.g., the electronic device 202, the electronic device 204, or the server 208) and performing communication via the established communication channel. The communication module 290 may include one or more communication processors that are operable independently from the processor 220 (e.g., the application processor (AP)) and supports a direct (e.g., wired) communication or a wireless communication. According to an embodiment, the communication module 290 may include a wireless communication module 292 (e.g., a cellular communication module, a short-range wireless communication module, or a global navigation satellite system (GNSS) communication module) or a wired communication module 294 (e.g., a local area network (LAN) communication module or a power line communication (PLC) module). A corresponding one of these communication modules may communicate with the external electronic device via the first network 298 (e.g., a short-range communication network, such as Bluetooth^{™}, wireless-fidelity (Wi-Fi) direct, or infrared data association (IrDA)) or the second network 299 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 292 may identify and authenticate the electronic device 201 in a communication network, such as the first network 298 or the second network 299, using subscriber information (e.g., international mobile subscriber identity (IMSI)) stored in the subscriber identification module 296.

The wireless communication module 292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 292 may support a high-frequency band (e.g., the mmWave band) to achieve, e.g., a high data transmission rate. The wireless communication module 292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 292 may support various requirements specified in the electronic device 201, an external electronic device (e.g., the electronic device 204), or a network system (e.g., the second network 299). According to an embodiment, the wireless communication module 292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 297 may transmit or receive a signal or power to or from the outside (e.g., the external electronic device) of the electronic device 201. According to an embodiment, the antenna module 297 may include an antenna including a radiating element composed of a conductive material or a conductive pattern formed in or on a substrate (e.g., a printed circuit board (PCB)). According to an embodiment, the antenna module 297 may include a plurality of antennas (e.g., array antennas). In such a case, at least one antenna appropriate for a communication scheme used in the communication network, such as the first network 298 or the second network 299, may be selected, for example, by the communication module 290 (e.g., the wireless communication module 292) from the plurality of antennas. The signal or the power may then be transmitted or received between the communication module 290 and the external electronic device via the selected at least one antenna. According to an embodiment, another component (e.g., a radio frequency integrated circuit (RFIC)) other than the radiating element may be additionally formed as part of the antenna module 297.

According to various embodiments, the antenna module 297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 201 and the external electronic device 204 via the server 208 coupled with the second network 299. Each of the electronic devices 202 or 204 may be a device of a same type as, or a different type, from the electronic device 201. According to an embodiment, all or some of operations to be executed at the electronic device 201 may be executed at one or more of the external electronic devices 202, 204, or 208. For example, if the electronic device 201 should perform a function or a service automatically, or in response to a request from a user or another device, the electronic device 201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 201. The electronic device 201 may provide the outcome, with or without further processing of the outcome, as at least part of a reply to the request. To that end, a cloud computing, distributed computing, mobile edge computing (MEC), or client-server computing technology may be used, for example. The electronic device 201 may provide ultra low-latency services using, e.g., distributed computing or mobile edge computing. In another embodiment, the external electronic device 204 may include an internet-of-things (IoT) device. The server 208 may be an intelligent server using machine learning and/or a neural network. According to an embodiment, the external electronic device 204 or the server 208 may be included in the second network 299. The electronic device 201 may be applied to intelligent services (e.g., smart home, smart city, smart car, or healthcare) based on 5G communication technology or IoT-related technology.

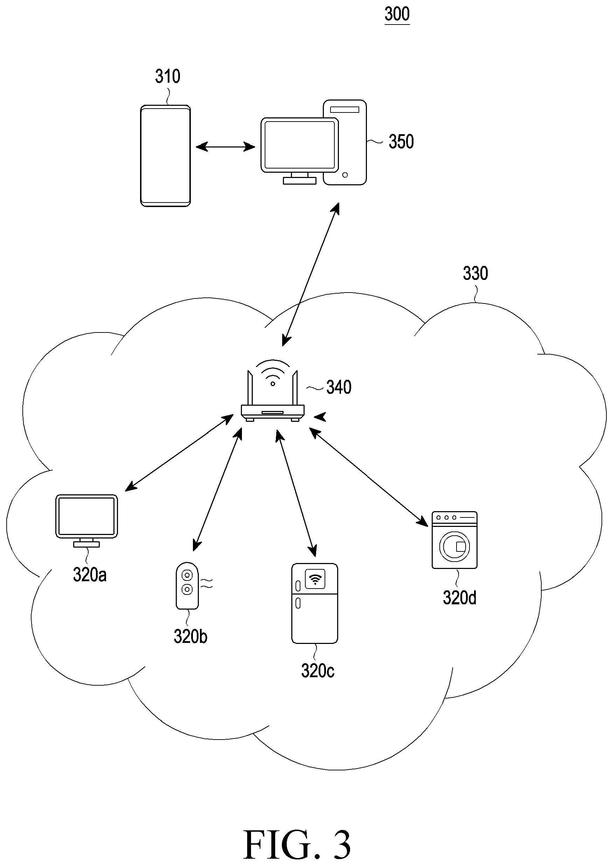

FIG. 3 is a diagram illustrating a network including controlled devices according to an embodiment of the disclosure.

Referring to FIG. 3, a network 300 (e.g., an IoT network) may include a server 350 which operates as an IoT cloud, an electronic device 310 (e.g., the electronic device 201) which may communicate with the server 350 through long-range wireless communication (e.g., the second network 299), and one or more controlled devices (e.g., IoT devices 320a, 320b, 320c, and 320d) which support IoT technology and may communicate with the server 350 through short-range wireless communication (e.g., Bluetooth or Wi-Fi) in a local network 330 (e.g., a Bluetooth network or a Wi-Fi network). In an embodiment, a hub device (not shown) (e.g., a smartphone, a tablet, a home automation panel, a personal computer (PC), or a TV) configured to manage the connection and state of the IoT devices 320a, 320b, 320c, and 320d may be further included in the local network 330. The electronic device 310 may communicate with the IoT devices 320a, 320b, 320c, and 320d via the server 350, through long-range wireless communication (e.g., the second network 299), or through short-range wireless communication (e.g., the first network 298).

The IoT devices 320a, 320b, 320c, and 320d may be controlled (e.g., to report states and/or to perform specified actions) by a remote command (e.g., a control command from the electronic device 310), and may include at least one of, for example, a television, an air conditioner, an air purifier, a refrigerator, a washing machine, an air dresser, a bulb, a security camera, a sensor, or a window treatment. The IoT devices 320a, 320b, 320c, and 320d may communicate with the electronic device 310 via an access point (AP) 340 or a hub device (not illustrated) in the local network 330, may communicate with the electronic device 310 via the server 350, and/or may communicate with the electronic device 310 directly (e.g., without the server 350, the AP 330, or the hub device). In an embodiment, the IoT devices 320a, 320b, 320c, and 320d may be configured to communicate with the electronic device 310 through long-range wireless communication (e.g., the second network 299) or short-range wireless communication (e.g., the first network 298). In an embodiment, the IoT devices 320a, 320b, 320c, and 320d may be configured to communicate with the server 350 through long-range wireless communication (e.g., the second network 299) or short-range wireless communication (e.g., the first network 298).

In an embodiment, the electronic device 310 may be a personal electronic device such as a smartphone, a tablet, or a smart watch, or an electronic device having a display and a user interface, such as a television or a control console. In an embodiment, the electronic device 310 may be connected (e.g., paired) with at least one external electronic device (not shown) (e.g., a smart watch or another smartphone). The at least one external electronic device may be configured to directly execute or execute, through the electronic device 310, at least some of functions of the electronic device 310.

In an embodiment, the electronic device 310 may discover at least one (e.g., the IoT device 320a) of the IoT devices 320a, 320b, 320c, and 320d, and may perform a procedure (e.g., onboarding) of registering (e.g., signing up and signing in) the discovered IoT device 320a with the server 350. The IoT devices 320a, 320b, 320c, and 320d may be registered with the server 350 to be associated with a user account. The electronic device 310 may monitor and control, based on a user account, IoT devices 320a, 320b, 320c, and 320d registered with the server 350.

The electronic device 310 may identify the states of the IoT devices 320a, 320b, 320c, and 320d to be used by a user for an IoT service, or may control the IoT devices 320a, 320b, 320c, and 320d (e.g., transmit a control command to instruct the execution of a specific action). The electronic device 310 may be an owner device in the local network 330. At least one member device (not shown), having at least some capabilities and/or control authority of the electronic device 310, may be included in the network 300. In an embodiment, the member device may not be able to perform a registration procedure for the IoT devices 320a, 320b, 320c, and 320d, but may perform a function of identifying or controlling the states of the IoT devices 320a, 320b, 320c, and 320d registered with the server 350.

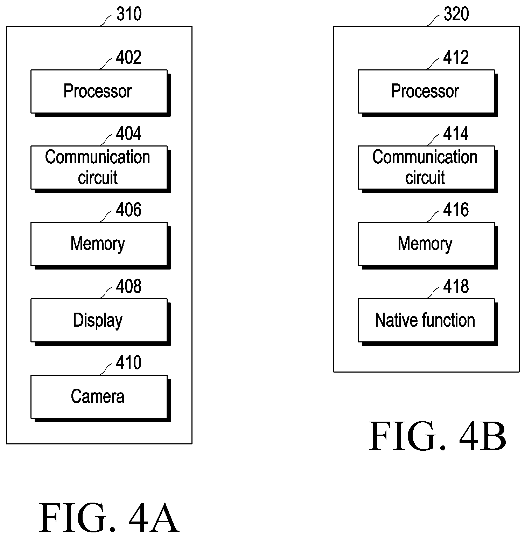

FIG. 4A is a block diagram illustrating the configuration of an electronic device that performs IoT control according to an embodiment of the disclosure.

Referring to FIG. 4A, an electronic device 310 (e.g., the electronic device 201) may be a device that implements an IoT service (e.g., an event-based IoT service) in a network 300 (e.g., an IoT network). For example, the IoT network may be a smart home network, and the IoT service may be an automation service. The electronic device 310 may include a processor 402, a communication circuit 404, memory 406, a display 408, and/or a camera 410. At least some of the components of the second electronic device 305 may be similar to the components in FIG. 2.

The electronic device 310 may include the communication circuit 404 (e.g., the communication module 290 in FIG. 2) that may transmit or receive signals to or from an external electronic device (e.g., at least one of the devices 124 in FIG. 1, the electronic device 201 in FIG. 2, the server 350, the AP 330, or the IoT devices 320a, 320b, 320c, and 320d in FIG. 3) by using one or more antennas (not shown). In an embodiment, the one or more antennas may be implemented as part of the antenna module 297 in FIG. 2. The electronic device 310 may support at least one of long-term evolution (LTE), 5G/new radio (NR), Zigbee, Z-Wave, ultra-wideband (UWB), Wi-Fi, or Bluetooth (e.g., Bluetooth legacy (BT) and/or Bluetooth Low Energy (BLE)) via the communication circuit 404. The communication circuit 404 may include one or multiple communication circuits based on LTE, 5G/NR, Zigbee, Z-Wave, UWB, Wi-Fi, BT, and/or BLE.

The electronic device 310 may include the display 408 (e.g., the display module 260 in FIG. 2) for interfacing with a user. The electronic device 310 may display information (e.g., the states of the IoT devices 320a, 320b, 320c, and 320d and/or control objects of the IoT devices 320a, 320b, 320c, and 320d) related to an IoT service through the display 408, and/or may receive a user input (e.g., a command for controlling the IoT devices 320a, 320b, 320c, and 320d) related to the IoT service. In an embodiment, the electronic device 310 may further include an audio module (not shown) for receiving a voice-based user input.

The electronic device 310 may include the processor 402 (e.g., the processor 220 in FIG. 2) which may be implemented as one or more single-core processors or one or more multi-core processors, and the memory 406 (e.g., the memory 230 in FIG. 2) configured to store data and instructions for operations of the electronic device 310. The memory 406 may store applications (e.g., IoT client applications) for executing IoT services, user information, device information, connection information, a public key, or related data.

The processor 402 may onboard IoT service-related controlled devices (e.g., IoT devices 320a, 320b, 320c, and 320d), manage the states and operations of the IoT devices 320a, 320b, 320c, and 320d, and transmit, via the communication circuit 404, a control command for at least one controlled device based on a user input, directly or through the server 350, to the at least one controlled device.

The IoT devices 320a, 320b, 320c, and 320d may be onboarded (e.g., registered with the server 350) directly or with the assistance of the electronic device 310. At least one of the onboard IoT devices 320a, 320b, 320c, and 320d may be controlled by the server 350 or the electronic device 310. The electronic device 310 may output (e.g., display), via the display 408, information generated in a procedure in which at least one IoT device is onboarded.

The electronic device 310 may capture, via the camera 410, a machine-readable code (e.g., a quick response (QR) code or a bar code) related to at least one of the IoT devices 320a, 320b, 320c, and 320d in order to onboard at least one (e.g., the IoT device 320a) of the IoT devices 320a, 320b, 320c, and 320d. In an embodiment, the user may capture a machine-readable code by pointing the camera 410 of the electronic device 310 toward a QR code printed or attached to the product exterior or product box of the IoT device 320a. The electronic device 310 may directly obtain, from the QR code, or obtain, from an internet link obtained from the QR code, device information related to onboarding of the IoT device 320a (e.g., at least one of a serial number (SN), a device name, a model name, a model number, or D2D support information). In an embodiment, the D2D support information may indicate D2D communication technologies (e.g., at least one of Bluetooth, BLE, Wi-Fi, or UWB) supported by the IoT device 320a.

FIG. 4B is a block diagram illustrating the configuration of an IoT device that performs onboarding according to an embodiment of the disclosure.

Referring to FIG. 4B, an IoT device 320 (e.g., at least one of the IoT devices 320a, 320b, 320c, and 320d) may be a device that performs an inherent function, such as a home appliance. The IoT device 320 may be located in the IoT network 330. The IoT device 320 may include a processor 412, a communication circuit 414, memory 416, and/or a native function 418.

The IoT device 320 may include the communication circuit 414 that communicates with at least one of the electronic device 310, the AP 340, and/or the server 350 through a network (e.g., the Internet).

The IoT device 320 may include the processor 412 (e.g., the processor 220 in FIG. 2), which may be implemented as one or more single-core processors or one or more multi-core processors, and the memory 416 (e.g., the memory 230 in FIG. 2) for storing instructions and data for the operation of the IoT device 320.

The memory 416 may store user information, device information, connection information, a private key, or related data for onboarding the IoT device 320 and managing an IoT service. In an embodiment, the IoT device 320 may receive connection information necessary for onboarding from the electronic device 310 via the communication circuit 414, and may store the connection information in the memory 416. In an embodiment, the connection information may be information necessary to connect to the AP 340, and may include, for example, at least one of a network name (e.g., a service set identifier (SSID)), a password, account information, location information, channel information, or frequency information. The IoT device 320 may access the server 350 by using the connection information and may be registered with the server 350.

The processor 412 may onboard the IoT device 320 via the communication circuit 414, receive a control command from the server 350 or the electronic device 310 via the communication circuit 414, and report the onboarding result or the state of the IoT device 320 to the server 350 or the electronic device 310 via the communication circuit 414. The processor 412 may receive a control command related to controlling the IoT device 320 from the electronic device 310 and/or the server 350, and may control the native function 418 to operate based on the control command. The control command may be received from the server 350 via the AP 340, or may be received from the electronic device 310 through a device-to-device (D2D) connection (e.g., a Bluetooth connection, a BLE connection, or a Wi-Fi connection). The control information may indicate an action to be executed by the native function 418.

In an embodiment, the IoT device 320 may be onboarded before being brought online and operating via Wi-Fi (e.g., the AP 340). The IoT device 320 may obtain connection information necessary to connect to the AP 340 from the electronic device 310 before being onboarded. The IoT device 320 may use the connection information to connect to the AP 340, access the server 350 via the AP 340, and then perform a procedure of registering (e.g., signing up and signing in) with the server 350. In embodiments of the disclosure, onboarding may include an operation in which the IoT device 320 is connected to the server 350 and signs up for and signs in with the server 350. Embodiments of the disclosure may be related to an operation in which the electronic device 310 provides connection information to the IoT device 320.

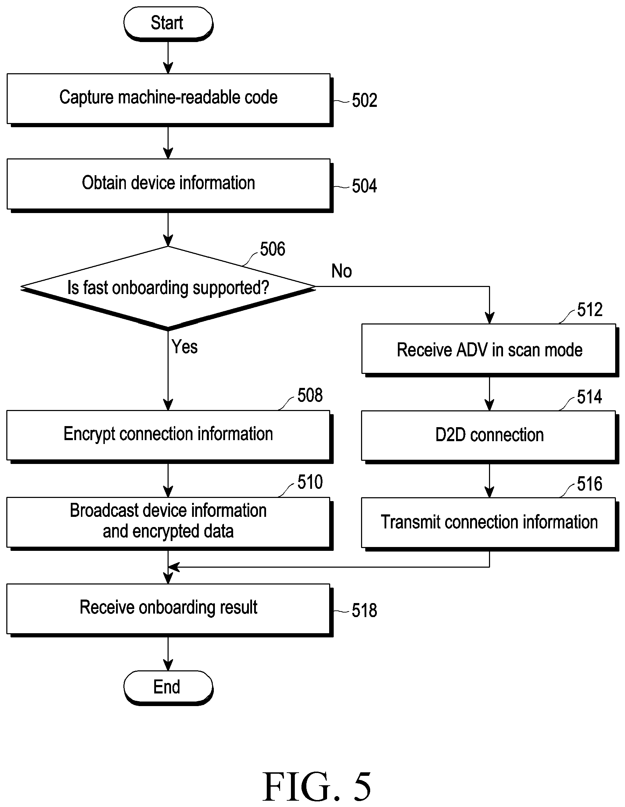

FIG. 5 is a flowchart illustrating an operation of an electronic device according to an embodiment of the disclosure. According to embodiments, at least one of the operations described below may be omitted, modified, or executed in a different order. In an embodiment, at least one of the operations described below may be executed by the processor 402 of the electronic device 310.

Referring to FIG. 5, in operation 502, the electronic device 310 (e.g., the processor 402) may capture a machine-readable code (e.g., a QR code attached to the outside of the IoT device 320) via the camera 410. In operation 504, the electronic device 310 (e.g., the processor 402) may obtain device information of the IoT device 320, based on the QR code. In an embodiment, the electronic device 310 (e.g., the processor 402) may directly obtain the device information from the QR code, or may download the device information from an Internet address obtained from the QR code.

In an embodiment, the device information may include at least one of unique identification information (e.g., a serial number) for identifying the ownership of the IoT device 320 by a user, a device name, a model name, a model number, or D2D support information. In an embodiment, the D2D support information may include at least one of a D2D communication technology (e.g., Bluetooth, BLE, or Wi-Fi), a version, channel information, and/or frequency information supported by the IoT device 320. In an embodiment, the device information may include information indicating whether the IoT device 320 supports fast onboarding according to the embodiments of the disclosure. The fast onboarding may include an operation in which the IoT device 320 receives connection information broadcast by the electronic device 310 through scanning according to the embodiments described below.

In operation 506, the electronic device 310 (e.g., the processor 402) may determine whether the IoT device 320 supports fast onboarding according to the embodiments of the disclosure. In an embodiment, the fast onboarding may include an operation in which the electronic device 310 broadcasts device information of the IoT device 320. In an embodiment, the electronic device 310 (e.g., the processor 402) may, based on the obtained device information (e.g., a model name and/or a model number), identify whether the IoT device 320 corresponding to the model name and/or the model number supports fast onboarding from prestored mapping information. In an embodiment, the electronic device 310 (e.g., the processor 402) may receive, from a server (e.g., the server 340 or a manufacturer server), information indicating whether the IoT device 320 supports fast onboarding, based on a model name and/or the model number included in the device information.

When it is determined that the IoT device 320 supports fast onboarding, the electronic device 310 (e.g., the processor 402) may proceed to operation 508. When it is determined that the IoT device 320 does not support fast onboarding, the electronic device 310 (e.g., the processor 402) may proceed to operation 512.

In operation 508, the electronic device 310 (e.g., the processor 402) may encrypt connection information to be used when the IoT device 320 is connected to the Internet for onboarding, by using a specified encryption key. In an embodiment, the connection information may include information (e.g., an SSID and/or a password) related to an AP (e.g., the AP 340) of a local network (e.g., the local network 330) to which the IoT device 320 is to be connected. In an embodiment, the connection information may further include at least one of account information, location information, version information, channel information, or frequency information. In an embodiment, the connection information may be related to at least one of a local network to which the electronic device 310 is currently connected, a local network to which the electronic device 310 has been previously connected, or a local network selected by a user.

In an embodiment, the electronic device 310 (e.g., the processor 402) may encrypt the connection information with a public key corresponding to a private key stored in the IoT device 320. In an embodiment, the electronic device 310 (e.g., the processor 402) may determine a public key corresponding to the IoT device 320, based on the device information obtained in operation 504.

In operation 510, the electronic device 310 (e.g., the processor 402) may broadcast the device information and the encrypted data according to a specified method (e.g., Bluetooth, BLE, Wi-Fi, or UWB). In an embodiment, the electronic device 310 (e.g., the processor 402) may include the device information and the encrypted data in a packet (e.g., a Bluetooth or BLE advertising (ADV) packet, or a Wi-Fi beacon frame) of a specified format that can be received by the IoT device 320 in a scan mode, and transmit the packet to the IoT device 320. In an embodiment, the electronic device 310 (e.g., the processor 402) may include the device information and the encrypted data in a single packet and broadcast the single packet, or may include fragments of the device information and the encrypted data in one or more packets and broadcast the one or more packets.

In an embodiment, the IoT device 320 before the onboarding may operate in a scan mode and may receive the at least one packet broadcast by the electronic device 310. The IoT device 320 may receive the device information and the encrypted data through the at least one packet, and may decrypt the encrypted data by using a specified private key to obtain the connection information. Based on identifying that the received device information matches device information (e.g., a serial number) of the IoT device 320, the IoT device 320 may perform onboarding (e.g., connection to the AP 340 and signing-up/signing-in with the server 350) based on the connection information.

In an embodiment, the electronic device 310 (e.g., the processor 402) may repeatedly broadcast the device information and the encrypted data through the at least one packet for a predetermined time (e.g., 1 minute) and/or a predetermined number of repetitions. In an embodiment, the electronic device 310 (e.g., the processor 402) may broadcast the device information and the encrypted data through the at least one packet until a response to the successful onboarding of the IoT device 320 is received. In an embodiment, the electronic device 310 (e.g., the processor 402) may continue to broadcast the device information and the encrypted data until receiving reception confirmation information indicating that at least one packet has been completely received from the IoT device 320.

In an embodiment, the electronic device 310 (e.g., the processor 402) may display a message requesting to identify whether a specified notification (e.g., a beep sound) is output from the IoT device 320 while the at least one packet is repeatedly broadcast. For example, the electronic device 310 (e.g., the processor 402) may output a text message, "Did the device emit a beep sound?"

In an embodiment, when the electronic device 310 (e.g., the processor 402) has transmitted the at least one packet for a predetermined time or a predetermined number of times, when a user input indicating that a specified notification has been output from the IoT device 320 has been received, or when reception confirmation information regarding the at least one packet has been received from the IoT device 320, or a specified sound (e.g., a beep sound) output from the IoT device 320 has been received through a microphone (e.g., the audio module 270), the electronic device 310 may start onboarding (e.g., QR scanning) of another IoT device even before the onboarding result of the IoT device 320 is identified.

In operation 518, the electronic device 310 (e.g., the processor 402) may receive, from the server 340, the onboarding result (e.g., a successful onboarding) of the IoT device 320. In an embodiment, the electronic device 310 (e.g., the processor 402) may receive the onboarding result while repeatedly broadcasting the device information and the encrypted data through the at least one packet or after broadcasting the device information and the encrypted data through the at least one packet. The electronic device 310 (e.g., the processor 402) may stop broadcasting the device information and the encrypted data, based on receiving the onboarding result.

In an embodiment, after receiving the onboarding result from the server 340, the electronic device 310 (e.g., the processor 402) may display a pop-up window asking whether to permit onboarding of the IoT device 320. When a user input for not allowing onboarding of the IoT device 320 is received through the pop-up window, the electronic device 310 (e.g., the processor 402) may transmit a request for cancellation of onboarding of the IoT device 320 to the server 340.

In an embodiment, the electronic device 310 (e.g., the processor 402) may directly receive, from a user via a user interface (e.g., the display module 260), identification information (e.g., a serial number or a temporary passcode) that enables identification of the user ownership of the IoT device 320, instead of performing operation 502 and operation 504. In an embodiment, the IoT device 320 may include a display, such as a TV or a family hub, and may display a one-time temporary passcode through the display. The electronic device 310 may receive the identification information from the user via a user interface, and may broadcast the identification information together with the encrypted connection information in operation 508.

Through the above-described operations, the electronic device 310 may trigger onboarding of the IoT device 320 only by performing an operation of capturing a QR code from a user's perspective, and may simplify and expedite the onboarding procedure by providing connection information necessary for the onboarding to the IoT device 320 without a D2D connection with the IoT device 320. Through the above-described operations, before the onboarding of one IoT device (e.g., the IoT device 320a) is completed (e.g., before the onboarding result is received), the electronic device 310 may capture a QR code of another IoT device (e.g., the IoT device 320b) to trigger onboarding of the other IoT device 320b. The electronic device 310 may consecutively capture QR codes of multiple IoT devices (e.g., the IoT devices 320a and 320b), and thus may proceed with onboarding of the multiple IoT devices in parallel or at least partially simultaneously without waiting.

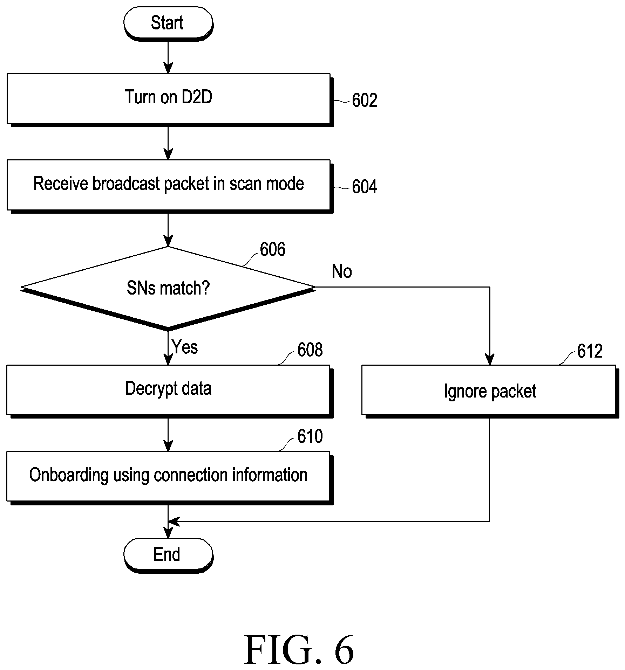

FIG. 6 is a flowchart illustrating operations of an IoT device according to an embodiment of the disclosure. According to embodiments, at least one of the operations described below may be omitted, modified, or executed in a different order. In an embodiment, at least one of the operations described below may be executed by the processor 412 of the IoT device 320.

Referring to FIG. 6, in operation 602, the IoT device 320 (e.g., the processor 412) may turn on (e.g., activate the communication circuit 414) a D2D function before onboarding. In an embodiment, the IoT device 320 (e.g., the processor 412) may turn on the D2D function, based on identifying that the IoT device 320 is powered on for the first time and is not onboarded for an IoT service (e.g., is not connected to the server 350). In an embodiment, the IoT device 320 (e.g., the processor 412) may turn on the D2D function, based on a user input. In an embodiment, the IoT device 320 (e.g., the processor 412) may start operating in a scan mode, based on the D2D function being turned on. In an embodiment, the IoT device 320 (e.g., the processor 412) may operate in a scan mode for a predetermined time before the onboarding, and when a packet including connection information necessary for the onboarding is not received for the predetermined time, the IoT device 320 may stop the scan mode and output onboarding failure.

In operation 604, the IoT device 320 (e.g., the processor 412) may operate in a scan mode before the onboarding and may receive at least one packet (e.g., a Bluetooth or BLE ADV packet, or a Wi-Fi beacon frame) broadcast from the electronic device 310 in a specified method (e.g., Bluetooth, BLE, Wi-Fi, or UWB). The IoT device 320 (e.g., the processor 412) may obtain device information included in the at least one packet.

In operation 606, the IoT device 320 (e.g., the processor 412) may determine whether the device information included in the at least one packet matches device information (e.g., a serial number or a temporary password) of the IoT device 320. When the obtained device information matches the device information of the IoT device 320, the IoT device 320 (e.g., the processor 412) may proceed to operation 608. However, when the obtained device information does not match the device information of the IoT device 320 or when the packet does not include the device information, the IoT device 320 (e.g., the processor 412) may proceed to operation 612. In an embodiment, based on identifying that the device information included in the at least one packet matches the device information of the IoT device 320, the IoT device 320 (e.g., the processor 412) may output a notification (e.g., a beep sound, a text message, or a voice message) for indicating that onboarding has been performed.

In operation 608, the IoT device 320 (e.g., the processor 412) may decrypt encrypted data included in the at least one received packet, and may obtain connection information included in the encrypted data. In operation 610, the IoT device 320 (e.g., the processor 412) may perform an onboarding procedure by using the connection information (e.g., at least one of the SSID, the password, the account information, the location information, the channel information, or the frequency information). In an embodiment, the IoT device 320 (e.g., the processor 412) may be connected to the AP 340 by using the connection information, may be connected to the server 350 via the AP 340, and may perform signing up and signing in with the server 350.

In operation 612, the IoT device 320 (e.g., the processor 412) may ignore the at least one received packet and may not proceed with the onboarding procedure.

Through the above-described operations, the IoT device 320 may obtain connection information necessary for onboarding without a D2D connection with the electronic device 310, and thus may quickly start the onboarding procedure.

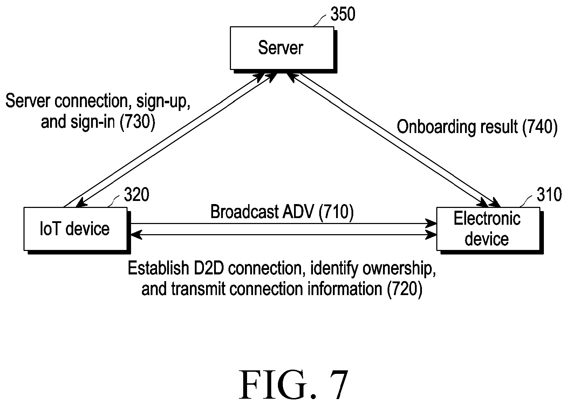

FIG. 7 is a diagram illustrating an onboarding procedure via a D2D connection according to an embodiment of the disclosure.

Referring to FIG. 7, in operation 710, an IoT device 320 before onboarding may periodically broadcast a packet (e.g., a Bluetooth or BLE ADV packet) including device information of the IoT device 320. The electronic device 310 may operate in a scan mode to discover the IoT device 320. The electronic device 310 may receive an ADV packet broadcasted by the IoT device 320 in the scan mode, and may discover the IoT device 320 via the ADV packet.

In operation 720, the electronic device 310 may establish a D2D connection with the IoT device 320, identify ownership of the IoT device 320 via the D2D connection, and transmit, via the D2D connection, connection information to the IoT device 320 which has the identified ownership. In an embodiment, the electronic device 310 may disconnect the D2D connection after transmitting the connection information to the IoT device 320.

In operation 730, the IoT device 320 may be connected to the AP 340 by using the connection information, and may be connected to the server 350 via the AP 340. The IoT device 320 may proceed with onboarding by signing up and signing in with the server 350 after being connected to the server 350.

In operation 740, the server 350 may transmit an onboarding result (e.g., a successful onboarding) of the IoT device 320 to the electronic device 310, based on identifying that the IoT device 320 has been onboarded to the server 350. Based on identifying the successful onboarding of the IoT device 320, the electronic device 310 may complete the onboarding of the IoT device 320, and may start onboarding of another IoT device. In an embodiment, when the onboarding result indicating the successful onboarding of the IoT device 320 is not received from the server 350 within a predetermined time, the electronic device 310 may re-establish a D2D connection with the IoT device 320 and repeat the onboarding procedure. In an embodiment, the electronic device 310 may not start onboarding of another IoT device until the successful onboarding of the IoT device 320 is identified.

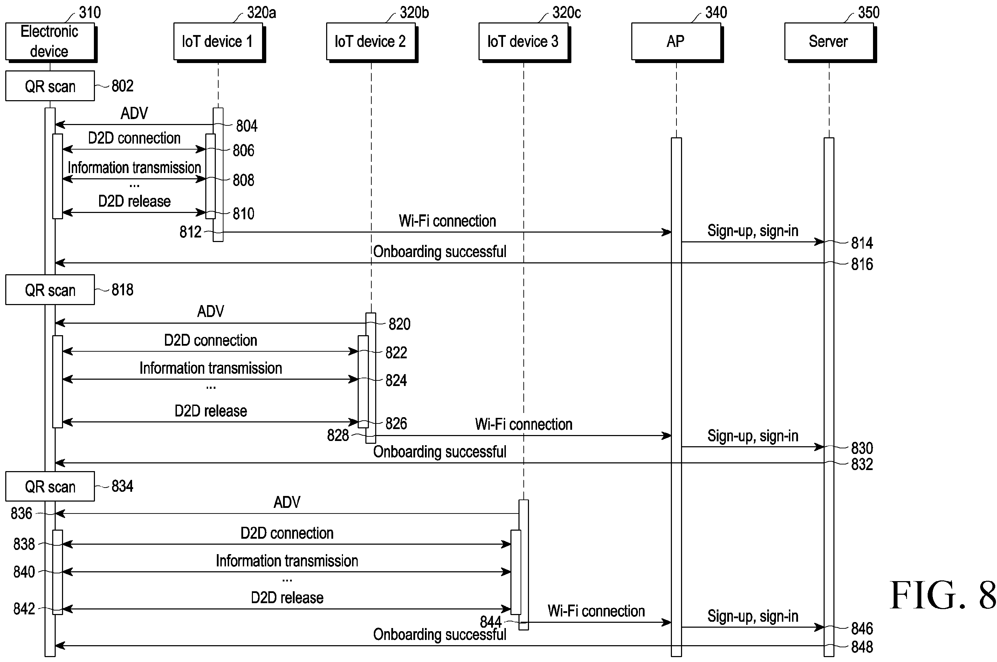

FIG. 8 is a sequence diagram illustrating sequential onboarding of multiple devices according to an embodiment of the disclosure. According to embodiments, at least one of the operations described below may be omitted, modified, or executed in a different order.

Referring to FIG. 8, in operation 802, the electronic device 310 may scan a QR code of an IoT device (e.g., an IoT device 1 320a) via the camera 410. In an embodiment, the electronic device 310 may obtain device information (e.g., a serial number) of the IoT device 1 320a, based on the QR code. In operation 804, the IoT device 1 320a may periodically broadcast, automatically or based on a user input, a packet (e.g., a Bluetooth or BLE ADV packet) including the device information of the IoT device 1 320a before onboarding. The electronic device 310 may receive the ADV packet by performing a scan for device addition.

In operation 806, the electronic device 310 may establish a first D2D connection (e.g., a Bluetooth connection, a BLE connection, or a Wi-Fi connection) with the IoT device 1 320a that has been discovered by receiving the ADV packet. In an embodiment, the electronic device 310 may establish the first D2D connection by performing a D2D connection establishment procedure based on Bluetooth, BLE, or Wi-Fi with respect to the IoT device 1 320a.

In operation 808, the electronic device 310 may transmit information (e.g., connection information) necessary for onboarding to the IoT device 1 320a via the first D2D connection. In an embodiment, the electronic device 310 may identify the user ownership of the IoT device 1 320a via the first D2D connection, based on the device information obtained from the QR code, and may transmit the connection information to the IoT device 1 320a via the first D2D connection. In operation 810, the electronic device 310 may release the first D2D connection after transmitting the connection information. In an embodiment, the electronic device may release the first D2D connection after receiving an onboarding result in operation 816.

In operation 812, the IoT device 1 320a may establish a Wi-Fi connection with the AP 340, based on the connection information received via the first D2D connection. In an embodiment, the connection information may include at least one of an SSID, a password, channel information, or frequency information related to the AP 340, and the IoT device 1 320a may be connected to the AP 340 by using the connection information. In operation 814, the IoT device 1 320a may perform a sign-up and sign-in procedure for the server 350 via the AP 340. In an embodiment, the IoT device 1 320a may sign up with the server 350, based on a user account.

In operation 816, the server 350 may store registration information related to the IoT device 1 320a, and may transmit, to the electronic device 310, an onboarding result indicating that onboarding of the IoT device 1 320a has been successfully completed. In an embodiment, the server 350 may transmit the onboarding result to the electronic device 310 via the AP 340 or via another network (e.g., another Wi-Fi network or a cellular network). The electronic device 310 may identify that the onboarding of the IoT device 1 320a is completed by receiving the onboarding result, and may start a QR scan for onboarding of a subsequent IoT device (e.g., the IoT device 2 320b).

In operation 818, the electronic device 310 may scan a QR code of an IoT device (e.g., the IoT device 2 320b) via the camera 410. In an embodiment, the electronic device 310 may obtain device information (e.g., a serial number) of the IoT device 2 320b, based on the QR code. In operation 820, the IoT device 2 320b may periodically broadcast a packet (e.g., a Bluetooth or BLE ADV packet) including the device information of the IoT device 2 320b automatically or based on a user input before onboarding. The electronic device 310 may receive the ADV packet by performing a scan for device addition.

In operation 822, the electronic device 310 may establish a second D2D connection (e.g., a Bluetooth connection, a BLE connection, or a Wi-Fi connection) with the IoT device 2 320b that has been discovered by receiving the ADV packet. In operation 824, the electronic device 310 may transmit information (e.g., connection information) necessary for onboarding to the IoT device 2 320b via the second D2D connection. In an embodiment, the electronic device 310 may identify the user ownership of the IoT device 2 320b via the second D2D connection, based on the device information obtained from the QR code, and may transmit the connection information to the IoT device 2 320b via the D2D connection. In operation 826, the electronic device 310 may release the second D2D connection after transmitting the connection information. In an embodiment, the electronic device may release the second D2D connection after receiving an onboarding result in operation 832.

In operation 828, the IoT device 2 320b may establish a Wi-Fi connection with the AP 340, based on the connection information received via the second D2D connection. In an embodiment, the connection information may include at least one of an SSID, a password, channel information, or frequency information related to the AP 340, and the IoT device 2 320b may be connected to the AP 340 by using the connection information. In operation 830, the IoT device 2 320b may perform a sign-up and sign-in procedure for the server 350 via the AP 340. In an embodiment, the IoT device 2 320b may sign up with the server 350, based on a user account.

In operation 832, the server 350 may store registration information related to the IoT device 2 320b, and transmit, to the electronic device 310, an onboarding result indicating that onboarding of the IoT device 2 320b has been successfully completed. The electronic device 310 may identify that the onboarding of the IoT device 2 320b is completed by receiving the onboarding result, and may then start a QR scan for onboarding of a subsequent IoT device (e.g., the IoT device 3 320c).

In operation 834, the electronic device 310 may scan a QR code of an IoT device (e.g., the IoT device 3 320c) via the camera 410. In an embodiment, the electronic device 310 may obtain device information (e.g., a serial number) of the IoT device 3 320c, based on the QR code. In operation 836, the IoT device 3 320c may periodically broadcast a packet (e.g., a Bluetooth or BLE ADV packet) including the device information of the IoT device 3 320c, automatically or based on a user input, before the onboarding. The electronic device 310 may receive the ADV packet by performing a scan for device addition.

In operation 838, the electronic device 310 may establish a third D2D connection (e.g., a Bluetooth connection, a BLE connection, or a Wi-Fi connection) with the IoT device 3 320c discovered by receiving the ADV packet. In operation 840, the electronic device 310 may transmit information (e.g., connection information) necessary for onboarding to the IoT device 3 320c via the third D2D connection. In an embodiment, the electronic device 310 may identify the user ownership of the IoT device 3 320c via the third D2D connection, based on the device information obtained from the QR code, and transmit the connection information to the IoT device 3 320c via the D2D connection. In operation 842, the electronic device 310 may release the third D2D connection after transmitting the connection information. In an embodiment, the electronic device may release the third D2D connection after receiving an onboarding result in operation 848.

In operation 844, the IoT device 3 320c may establish a Wi-Fi connection with the AP 340, based on the connection information received via the third D2D connection. In an embodiment, the connection information may include at least one of an SSID, a password, channel information, or frequency information related to the AP 340, and the IoT device 3 320c may be connected to the AP 340 by using the connection information. In operation 846, the IoT device 3 320c may perform a sign-up and sign-in procedure for the server 350 via the AP 340. In an embodiment, the IoT device 3 320c may sign up with the server 350, based on a user account.

In operation 848, the server 350 may store registration information related to the IoT device 3 320c, and may transmit an onboarding result indicating that the onboarding of the IoT device 3 320c has been successfully completed to the electronic device 310. The electronic device 310 may identify that onboarding of the IoT device 3 320c is completed by receiving the onboarding result.

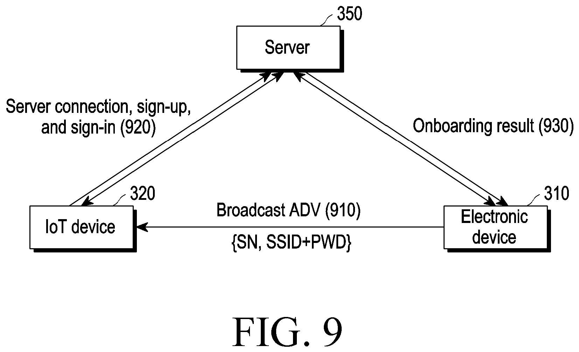

FIG. 9 is a diagram illustrating an onboarding procedure that does not use a D2D connection according to an embodiment of the disclosure.

Referring to FIG. 9, in operation 910, the electronic device 310 may, based on obtaining a machine-readable code (e.g., a QR code) of the IoT device 320 before onboarding, broadcast a packet (e.g., an ADV packet) including device information (e.g., a serial number (SN)) of the IoT device 320 and connection information (e.g., an SSID and a password (PWD)) to be used for onboarding of the IoT device 320. The IoT device 320 may operate in the scan mode before the onboarding, thereby obtaining the device information and the connection information through the packet without a D2D connection.

In operation 920, the IoT device 320 may perform, based on identifying the device information, an onboarding procedure (e.g., a server connection, sign-up, and sign-in) for the server 350 by using the connection information.

In operation 930, the server 350 may store registration information of the IoT device 320, and then transmit, to the electronic device 310, an onboarding result indicating that the IoT device 320 has been successfully onboarded.

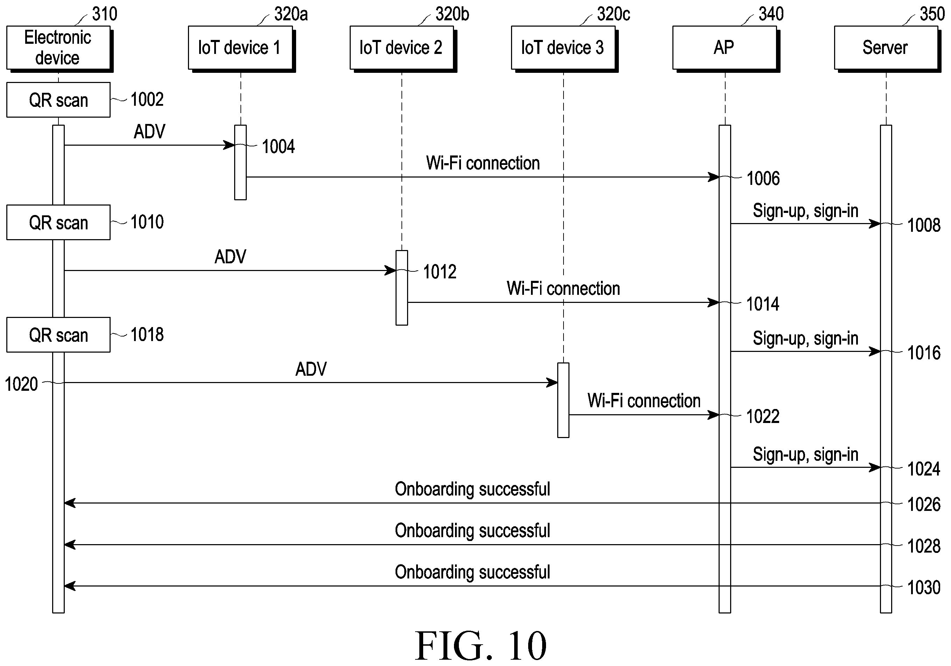

FIG. 10 is a sequence diagram illustrating parallel onboarding of multiple devices according to an embodiment of the disclosure. According to embodiments, at least one of the operations described below may be omitted, modified, or executed in a different order.

Referring to FIG. 10, in operation 1002, the electronic device 310 may scan a QR code of an IoT device (e.g., the IoT device 1 320a) via the camera 410. In an embodiment, the electronic device 310 may obtain device information (e.g., a serial number) of the IoT device 1 320a, based on the QR code. In operation 1004, the electronic device 310 may broadcast a packet (e.g., a Bluetooth or BLE ADV packet) including the device information of the IoT device 1 320a obtained from the QR code and information (e.g., connection information) required for the IoT device 1 320a to perform onboarding. In an embodiment, the electronic device 310 may encrypt the connection information by using a public key corresponding to the IoT device 1 320a identified based on the QR code, and may include the device information and the encrypted data in the ADV packet and transmit the ADV packet.

Although FIG. 10 illustrates that one packet is broadcast, in an embodiment, the electronic device 310 may divide and store the device information and the encrypted data in one or more ADV packets, and then broadcast the packets. In an embodiment, the electronic device 310 may include serial numbers in the one or more ADV packets so that the IoT device 1 320a can sequentially combine fragments of the encrypted data included in the ADV packets.

In an embodiment, the IoT device 1 320a may operate in a scan mode before onboarding and may receive the ADV packet. After identifying that unique identification information (e.g., SN) of the IoT device 1 320a is included in the ADV packet, the IoT device 1 320a may obtain the connection information from the encrypted data by decrypting the encrypted data included in the ADV packet by using a prestored private key. The IoT device 1 320a may, based on identifying that the device information (e.g., a serial number) included in the ADV packet matches the serial number of the IoT device 1 320a, determine that the obtained connection information is valid. The IoT device 1 320a may output, based on obtaining the valid connection information, a notification (e.g., a beep sound, a text message, or a voice message) indicating that an onboarding procedure is started.

In operation 1006, the IoT device 1 320a may establish a Wi-Fi connection with the AP 340, based on the connection information. In an embodiment, the connection information may include at least one of an SSID, a password, channel information, or frequency information related to the AP 340, and the IoT device 1 320a may be connected to the AP 340 by using the connection information. In operation 1008, the IoT device 1 320a may perform a sign-up and sign-in procedure for the server 350 via the AP 340. In an embodiment, the IoT device 1 320a may sign up with the server 350, based on a user account.

In operation 1010, the electronic device 310 may scan a QR code of another IoT device (e.g., the IoT device 2 320b) via the camera 410, before receiving an onboarding result of the IoT device 1 320a. In an embodiment, when the IoT device 1 320a outputs the notification (e.g., a beep sound) indicating that the onboarding procedure is started, the electronic device 310 may display a message that indicates that another IoT device may be added.

In an embodiment, the electronic device 310 may obtain device information (e.g., a serial number) of the IoT device 2 320b, based on the QR code. In operation 1012, the electronic device 310 may broadcast a packet (e.g., a Bluetooth or BLE ADV packet) including the device information of the IoT device 2 320b obtained from the QR code and information (e.g., connection information) required for the IoT device 2 320b to perform onboarding. In an embodiment, the electronic device 310 may encrypt the device information and the connection information by using a public key corresponding to the IoT device 2 320b identified based on the QR code, and may include the encrypted data in the ADV packet and transmit the ADV packet. In an embodiment, when the onboarding result of the IoT device 1 320a has not been received from the server 350, the electronic device 310 may include both the encrypted data related to the IoT device 1 320a and the encrypted data related to the IoT device 2 320b in the ADV packet of operation 1012.

In an embodiment, the IoT device 2 320b may operate in a scan mode before onboarding and may receive the at least one ADV packet. After identifying that the unique identification information (e.g., SN) of the IoT device 2 320b is included in the ADV packet, the IoT device 2 320b may obtain the device information and the connection information from the encrypted data included in the at least one ADV packet by decrypting the encrypted data with a prestored private key. The IoT device 2 320b may determine that the connection information is valid, based on identifying that the device information (e.g., the serial number) matches the serial number of the IoT device 2 320b.

In operation 1014, the IoT device 2 320b may establish a Wi-Fi connection with the AP 340, based on the connection information. In an embodiment, the connection information may include at least one of an SSID, a password, channel information, or frequency information related to the AP 340, and the IoT device 2 320b may be connected to the AP 340 by using the connection information. In operation 1016, the IoT device 2 320b may perform a sign-up and sign-in procedure for the server 350 via the AP 340. In an embodiment, the IoT device 2 320b may sign up with the server 350, based on a user account.

In operation 1018, before receiving the onboarding result of the IoT device 1 320a or the IoT device 2 320b, the electronic device 310 may scan a QR code of another IoT device (e.g., the IoT device 3 320c) via the camera 410. In an embodiment, the electronic device 310 may obtain device information (e.g., a serial number) of the IoT device 3 320c, based on the QR code. In operation 1020, the electronic device 310 may broadcast a packet (e.g., a Bluetooth or BLE ADV packet) including the device information of the IoT device 3 320c obtained from the QR code and information (e.g., connection information) required for the IoT device 3 320c to perform onboarding. In an embodiment, the electronic device 310 may encrypt the connection information by using a public key corresponding to the IoT device 3 320c identified based on the QR code, and may include the device information and the encrypted data in the ADV packet, and transmit the ADV packet.

In an embodiment, when the onboarding result of the IoT device 1 320a and/or the IoT device 2 320b has not been received from the server 350, the electronic device 310 may further include, in the ADV packet of operation 1018, the device information and the encrypted data related to the IoT device 1 320a and the device information and the encrypted data related to the IoT device 2 320b, in addition to the device information and the encrypted data related to the IoT device 3 320c.

In an embodiment, the IoT device 3 320c may operate in a scan mode before the onboarding and may receive the ADV packet. After identifying that unique identification information (e.g., SN) of the IoT device 3 320c is included in the ADV packet, the IoT device 3 320c may obtain the connection information from the encrypted data included in the ADV packet by decrypting the encrypted data by using a prestored private key. The IoT device 3 320c may determine that the connection information is valid, based on identifying that the device information (e.g., a serial number) included in the ADV packet matches the serial number of the IoT device 3 320c.

In operation 1022, the IoT device 3 320c may establish a Wi-Fi connection with the AP 340, based on the connection information. In an embodiment, the connection information may include at least one of an SSID, a password, channel information, or frequency information related to the AP 340, and the IoT device 3 320c may be connected to the AP 340 by using the connection information. In operation 1024, the IoT device 3 320c may perform a sign-up and sign-in procedure for the server 350 via the AP 340. In an embodiment, the IoT device 3 320c may sign up with the server 350, based on a user account.

In operations 1026, 1028, and 1030, the server 350 may transmit, to the electronic device 310, onboarding results indicating that onboarding of the IoT device 1 320a, the IoT device 2 320b, and the IoT device 3 320c has been successfully completed. In an embodiment, the server 350 may transmit the onboarding results to the electronic device 310 via the AP 340 or via another network (e.g., another Wi-Fi network or a cellular network). The electronic device 310 may identify that the onboarding of the IoT device 1 320a, the IoT device 2 320b, and the IoT device 3 320c has been completed by receiving the onboarding results. Although FIG. 10 illustrates that operations 1026, 1028, and 1030 are performed after operation 1024, operations 1026, 1028, and 1030 may be performed at any time after operations 1008, 1016, and 1024.

By the above-described operations, the electronic device 310 may perform onboarding of multiple IoT devices (e.g., the IoT device 1 320a, the IoT device 2 320b, and the IoT device 3 320c) in parallel only by operations of scanning QR codes. In an embodiment, onboarding of at least one of the IoT device 1 320a, the IoT device 2 320b, or the IoT device 3 320c may be triggered regardless of the successful onboarding of the other IoT devices.

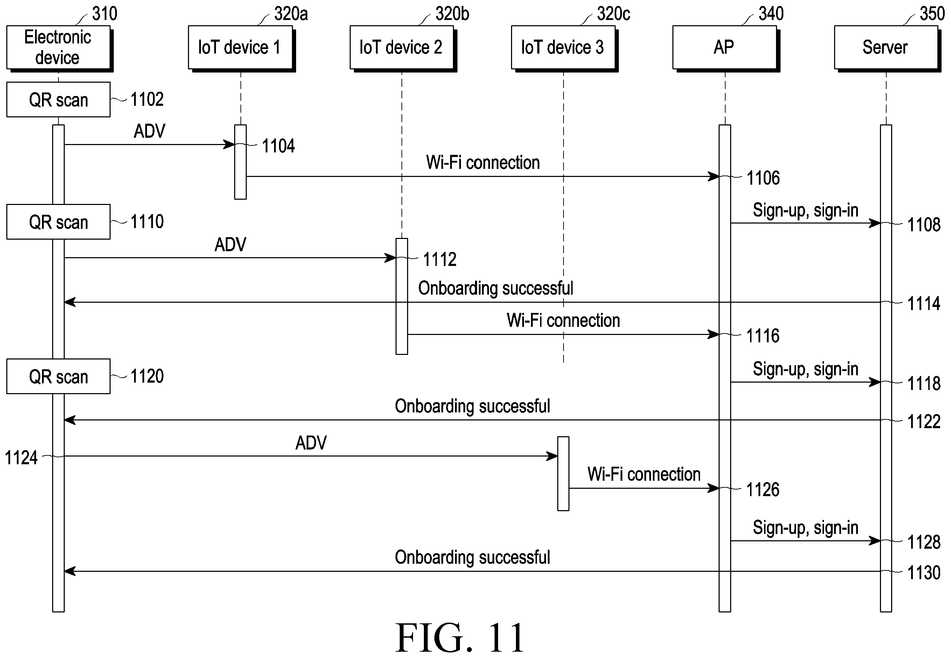

FIG. 11 is a sequence diagram illustrating simultaneous onboarding of multiple devices according to an embodiment of the disclosure. According to embodiments, at least one of the operations described below may be omitted, modified, or executed in a different order.

Referring to FIG. 11, in operation 1102, the electronic device 310 may scan a QR code of an IoT device (e.g., the IoT device 1 320a) via the camera 410. In an embodiment, the electronic device 310 may obtain device information (e.g., a serial number) of the IoT device 1 320a, based on the QR code. In operation 1104, the electronic device 310 may broadcast at least one packet (e.g., a Bluetooth or BLE ADV packet) including the device information of the IoT device 1 320a obtained from the QR code and information (e.g., connection information) required for the IoT device 1 320a to perform onboarding. In an embodiment, the electronic device 310 may encrypt the connection information by using a public key corresponding to the IoT device 1 320a identified based on the QR code, and include the device information and the encrypted data in the at least one ADV packet and transmit the at least one ADV packet.

In an embodiment, the IoT device 1 320a may operate in a scan mode before the onboarding and receive the at least one ADV packet. After identifying that unique identification information (e.g., SN) of the IoT device 1 320a is included in the ADV packet, the IoT device 1 320a may decrypt the encrypted data included in the at least one ADV packet by using a prestored private key, thereby obtaining the connection information from the encrypted data. The IoT device 1 320a may, based on identifying that the device information (e.g., a serial number) included in the at least one ADV packet matches the serial number of the IoT device 1 320a, determine that the connection information is valid. The IoT device 1 320a may output, based on obtaining the valid connection information, a notification (e.g., a beep sound, a text message, or a voice message) indicating that an onboarding procedure has started.

In operation 1106, the IoT device 1 320a may establish a Wi-Fi connection with the AP 340, based on the connection information. In an embodiment, the connection information may include at least one of an SSID, a password, channel information, or frequency information related to the AP 340, and the IoT device 1 320a may be connected to the AP 340 by using the connection information. In operation 1108, the IoT device 1 320a may perform a sign-up and sign-in procedure for the server 350 via the AP 340. In an embodiment, the IoT device 1 320a may sign up with the server 350, based on a user account.

In operation 1110, before receiving a result of the onboarding of the IoT device 1 320a, the electronic device 310 may scan a QR code of another IoT device (e.g., the IoT device 2 320b) via the camera 410. In an embodiment, when the notification (e.g., a beep sound) indicating that the onboarding procedure has started is output by the IoT device 1 320a, the electronic device 310 may display a message indicating that another IoT device may be added.

In an embodiment, the electronic device 310 may obtain device information (e.g., a serial number) of the IoT device 2 320b, based on the QR code. In operation 1112, the electronic device 310 may broadcast at least one packet (e.g., a Bluetooth or BLE ADV packet) including the device information of the IoT device 2 320b obtained from the QR code and information (e.g., connection information) required for the IoT device 2 320b to perform onboarding. In an embodiment, the electronic device 310 may encrypt the connection information by using a public key corresponding to the IoT device 2 320b identified based on the QR code, and may include the device information and the encrypted data in the at least one ADV packet and transmit the at least one ADV packet. In an embodiment, when an onboarding result of the IoT device 1 320a is not received from the server 350, the electronic device 310 may include, in at least one ADV packet of operation 1112, the device information and the encrypted data related to the IoT device 1 320a and the device information and the encrypted data related to the IoT device 2 320b.

In operation 1114, while broadcasting the at least one ADV packet related to the IoT device 2 320b, the electronic device 310 may receive, from the server 350, an onboarding result indicating that the IoT device 1 320a has been successfully onboarded. Based on the successful onboarding of the IoT device 1 320a, the electronic device 310 may include the device information of the IoT device 2 320a and the connection information in the at least one broadcast ADV packet, without including device information related to the IoT device 1 320a.

In an embodiment, the IoT device 2 320b may operate in a scan mode before onboarding and receive the at least one ADV packet. After identifying that unique identification information (e.g., a serial number (SN)) of the IoT device 2 320b is included in the ADV packet, the IoT device 2 320b may decrypt the encrypted data included in the at least one ADV packet by using a prestored private key, thereby obtaining the connection information from the encrypted data. The IoT device 2 320b may, based on identifying that the device information (e.g., a serial number) included in the at least one ADV packet matches the serial number of the IoT device 2 320b, determine that the connection information is valid.

In operation 1116, the IoT device 2 320b may establish a Wi-Fi connection with the AP 340, based on the connection information. In an embodiment, the connection information may include at least one of an SSID, a password, channel information, or frequency information related to the AP 340, and the IoT device 2 320b may be connected to the AP 340 by using the connection information. In operation 1118, the IoT device 2 320b may perform a sign-up and sign-in procedure for the server 350 via the AP 340. In an embodiment, the IoT device 2 320b may sign up with the server 350, based on a user account.

In operation 1120, before receiving an onboarding result of the IoT device 2 320b, the electronic device 310 may scan a QR code of another IoT device (e.g., the IoT device 3 320c) via the camera 410. In an embodiment, the electronic device 310 may obtain device information (e.g., a serial number) of the IoT device 3 320c, based on the QR code.

In operation 1122, the electronic device 310 may receive, from the server 350, an onboarding result indicating that the IoT device 2 320b has been successfully onboarded.

In operation 1124, the electronic device 310 may broadcast a packet (e.g., a Bluetooth or BLE ADV packet) including the device information of the IoT device 3 320c obtained from the QR code and information (e.g., connection information) required for the IoT device 3 320c to perform onboarding. In an embodiment, the electronic device 310 may encrypt the connection information by using a public key corresponding to the IoT device 3 320c identified based on the QR code, and may include the device information and the encrypted data in the ADV packet and transmit the ADV packet.

In an embodiment, since the onboarding result of the IoT device 1 320a and/or the IoT device 2 320b has been received from the server 350, the electronic device 310 may include, in the ADV packet of operation 1018, only the device information and the encrypted data related to the IoT device 3 320c.

In an embodiment, the IoT device 3 320c may operate in a scan mode before the onboarding and receive the ADV packet. After identifying that unique identification information (e.g., SN) of the IoT device 3 320b is included in the ADV packet, the IoT device 3 320c may decrypt the encrypted data included in the ADV packet by using a prestored private key, thereby obtaining the connection information from the encrypted data. The IoT device 3 320c may determine that the connection information is valid, based on identifying that the device information (e.g., a serial number) included in the ADV packet matches the serial number of the IoT device 3 320c.

In operation 1126, the IoT device 3 320c may establish a Wi-Fi connection with the AP 340, based on the connection information. In an embodiment, the connection information may include at least one of an SSID, a password, channel information, or frequency information related to the AP 340, and the IoT device 3 320c may be connected to the AP 340 by using the connection information. In operation 1128, the IoT device 3 320c may perform a sign-up and sign-in procedure for the server 350 via the AP 340. In an embodiment, the IoT device 3 320c may sign up with the server 350, based on a user account.

In operation 1130, the server 350 may transmit, to the electronic device 310, an onboarding result indicating that the onboarding of the IoT device 3 320c has been successfully completed. In an embodiment, the server 350 may transmit the onboarding result to the electronic device 310 via the AP 340 or via another network (e.g., another Wi-Fi network or a cellular network). The electronic device 310 may identify that onboarding of the IoT device 1 320a, the IoT device 2 320b, and the IoT device 3 320c has all been completed by receiving the onboarding results of operations 1114, 1122, and 1130.

Through the above-described operations, the electronic device 310 may at least partially and simultaneously perform onboarding of multiple IoT devices (e.g., the IoT device 1 320a, the IoT device 2 320b, and the IoT device 3 320c) only by operations of scanning QR codes. In an embodiment, onboarding of at least one of the IoT device 1 320a, the IoT device 2 320b, or the IoT device 3 320c may be triggered regardless of the successful onboarding of another IoT device.

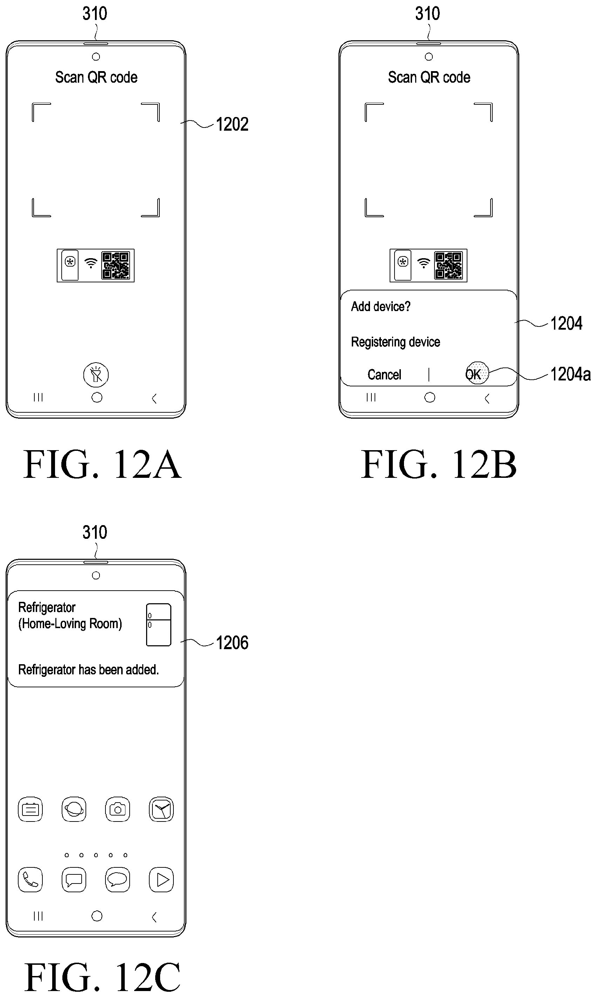

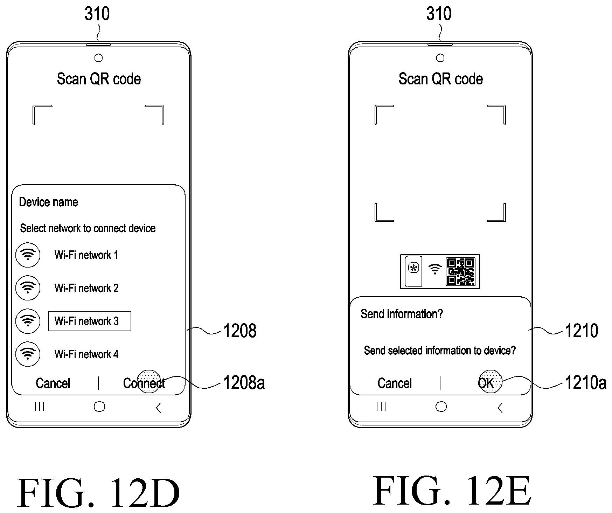

FIGS. 12A, 12B, 12C, 12D, and 12E are diagrams each illustrating a user interface for a procedure for adding an IoT device according to an embodiment of the disclosure.

Referring to FIG. 12A, the electronic device 310 may display, via the display module 260, a QR scan screen 1202 for adding a device (e.g., the IoT device 320) to an IoT network. The electronic device 310 may proceed to FIG. 12B or 12D, based on a QR code related to the IoT device 320 being captured through the QR scan screen 1202. In an embodiment, if connection information related to the IoT device 320 is stored and a Wi-Fi network corresponding to the connection information is available, the electronic device 310 may proceed to FIG. 12B, and if not, the electronic device 310 may proceed to FIG. 12D.

Referring to FIG. 12B, based on the QR code related to the IoT device 320 being captured through the QR scan screen 1202, the electronic device 310 may display a device addition window 1204 (e.g., "Do you want to add a device? A device is being registered. "). The electronic device 310 may identify, based on device information of the IoT device 320 obtained from the QR code, a D2D communication technology (e.g., at least one of Bluetooth, BLE, Wi-Fi, or UWB) supported by the IoT device 320.

The electronic device 310 may broadcast, based on receiving a user input 1204a (e.g., a touch on an "OK" object) that permits the registration of a device on the device addition window 1204, a packet including the device information and the encrypted connection information according to at least one of the embodiments of the disclosure. In an embodiment, the electronic device 310 may broadcast the packet, based on a D2D communication technology of the IoT device 320 identified based on the QR code. In an embodiment, when the IoT device 320 is identified as supporting BLE, the packet may include a BLE ADV packet. In an embodiment, the connection information may include a network name and/or a password of a Wi-Fi network to which the electronic device 310 is connected or has been connected, or may include a network name and/or a password of a Wi-Fi network stored by the electronic device 310 for use in an IoT service.

Referring to FIG. 12C, the electronic device 310 may display an onboarding completion window 1206, based on receiving, from the server 350 after the packet has been broadcast, an onboarding result indicating that the IoT device 320 has been successfully onboarded based on the connection information. For example, when the IoT device 320 is a refrigerator, the onboarding completion window 1206 may include "A refrigerator has been added." The electronic device 310 may quickly complete onboarding of the IoT device 320 after the user input on the device addition window 1204 without an additional user input or a procedural delay.

Referring to FIG. 12D, based on the QR code related to the IoT device 320 being captured through the QR scan screen 1202, the electronic device 310 may display a network selection window 1208. The electronic device 310 may identify a D2D communication technology (e.g., at least one of Bluetooth, BLE, Wi-Fi, or UWB) supported by the IoT device 320, based on the device information of the IoT device 320 obtained from the QR code, and may include networks accessible by the IoT device 320 in the network selection window 1208. The network selection window 1208 may include selection objects for one or more Wi-Fi networks available for an IoT service, for example, Wi-Fi network 1, Wi-Fi network 2, Wi-Fi network 3, and Wi-Fi network 4. In an embodiment, the Wi-Fi networks may include at least one of a Wi-Fi network to which the electronic device 310 is connected, a Wi-Fi network to which the electronic device 310 has been connected, a Wi-Fi network stored by the electronic device 310 for use in an IoT service, or a Wi-Fi network discoverable by the electronic device 310.

Referring to FIG. 12E, based on receiving a user input 1208a for selecting one Wi-Fi network (e.g., Wi-Fi network 3) in the network selection window 1208, the electronic device 310 may display an information transmission confirmation window 1210. The information transmission confirmation window 1210 may include, for example, "Do you want to transmit the selected network information to the device?" The electronic device 310 may, based on receiving a user input 1210a (e.g., a touch on the "OK" object) that permits transmission of network information on the information transmission confirmation window 1210, broadcast a packet including the device information and encrypted connection information of Wi-Fi network 3 according to at least one of the embodiments of the disclosure. The electronic device 310 may display the onboarding completion window 1206 in FIG. 12C, based on receiving, from the server 350 after the packet has been broadcast, an onboarding result indicating that the IoT device 320 has been successfully onboarded based on the connection information.

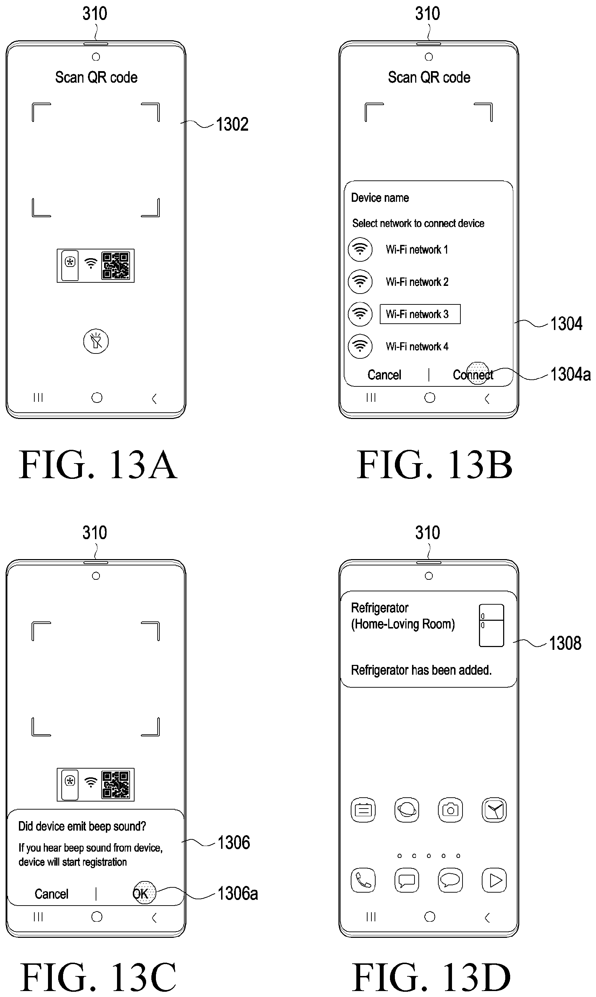

FIGS. 13A, 13B, 13C, and 13D are diagrams each illustrating a user interface for a procedure for adding an IoT device based on a beep sound according to an embodiment of the disclosure.

Referring to FIG. 13A, the electronic device 310 may display, via the display module 260, a QR scan screen 1302 for adding a device (e.g., the IoT device 320) to an IoT network. The electronic device 310 may proceed to FIG. 13B, based on a QR code related to the IoT device 320 being captured through the QR scan screen 1202.

Referring to FIG. 13B, the electronic device 310 may display a network selection window 1304, based on the QR code related to the IoT device 320 being captured through the QR scan screen 1302. The electronic device 310 may identify, based on device information of the IoT device 320 obtained from the QR code, a D2D communication technology (e.g., at least one of Bluetooth, BLE, Wi-Fi, or UWB) supported by the IoT device 320, and may include networks accessible by the IoT device 320 in the network selection window 1304. The network selection window 1304 may include selection objects for one or more Wi-Fi networks available for an IoT service, for example, Wi-Fi network 1, Wi-Fi network 2, Wi-Fi network 3, and Wi-Fi network 4. In an embodiment, the Wi-Fi networks may include at least one of a Wi-Fi network connected to which the electronic device 310 is connected, a Wi-Fi network to which the electronic device 310 has been connected, a Wi-Fi network stored by the electronic device 310 for use in an IoT service, or a Wi-Fi network discoverable by the electronic device 310.

Referring to FIG. 13C, the electronic device 310 may display a beep sound confirmation window 1306, based on receiving a user input 1304a for selecting one Wi-Fi network (e.g., Wi-Fi network 3) in a network selection window 1304. The beep sound confirmation window 1306 may include, for example, "Did the device emit a beep sound?" Based on receiving the user input 1304a (e.g., a touch on the "Connect" object) for selecting a network in the network selection window 1304, the electronic device 310 may broadcast a packet including the device information obtained from the QR code of the IoT device 320 and encrypted connection information of the selected network according to at least one of the embodiments of the disclosure.

In an embodiment, the electronic device 310 may determine whether the IoT device 320 supports a beeping sound output, based on the device information obtained from the QR code captured through the QR scan screen 1302 in FIG. 13A. In an embodiment, the electronic device 310 may determine whether the IoT device 320 supports a beeping sound output, based on the device information or device specification information related to the IoT device 320 received from a server (e.g., the server 350 or a manufacturer server). When the IoT device 320 supports the beep sound output, the electronic device 310 may output the beep sound confirmation window 1306 in FIG. 13C. When the IoT device 320 does not support the beep sound output, the electronic device 310 may proceed to FIG. 12B or FIG. 12C.

Based on receiving, on the beep sound confirmation window 1306, a user input 1306a (e.g., a touch on an "OK" object) for confirming that a beep sound has been emitted from the IoT device 320, the electronic device 310 may no longer display the beep sound confirmation window 1306, and may display the QR scan screen 1302 in FIG. 13A, another device addition screen, an initial screen of an IoT client application, or a home screen. The electronic device 310 may use the QR scan screen 1302 to scan a QR code of another IoT device to be onboarded. Based on receiving the user input 1306a in the beep sound confirmation window 1306 or receiving, from the IoT device 320, reception confirmation information indicating that connection information has been received, the electronic device 310 may, for example, display a text message "Onboarding is starting. You may move away from the device," or display a QR scan screen 1302 for adding another IoT device.

In an embodiment, instead of displaying the beep sound confirmation window 1306, the electronic device 310 may, after broadcasting the packet including the device information obtained from the QR code of the IoT device 320 and the encrypted connection information of the selected network, determine whether a specified sound (e.g., a beep sound of the IoT device 320) is received via a microphone (e.g., the audio module 270). Based on the beep sound of the IoT device 320 being received via the microphone, the electronic device 310 may display the QR scan screen 1302 in FIG. 13A for adding another IoT device, or may display another device addition screen (e.g., "Do you want to add another device?").

Referring to FIG. 13D, the electronic device 310 may display an onboarding completion window 1308, based on receiving, from the server 350, an onboarding result indicating that the IoT device 320 has been successfully onboarded based on the connection information. For example, when the IoT device 320 is a refrigerator, the onboarding completion window 1206 may include "The refrigerator has been added." For example, the onboarding device window 1308 may be displayed while the electronic device 310 is broadcasting device information and encrypted connection information for another IoT device.

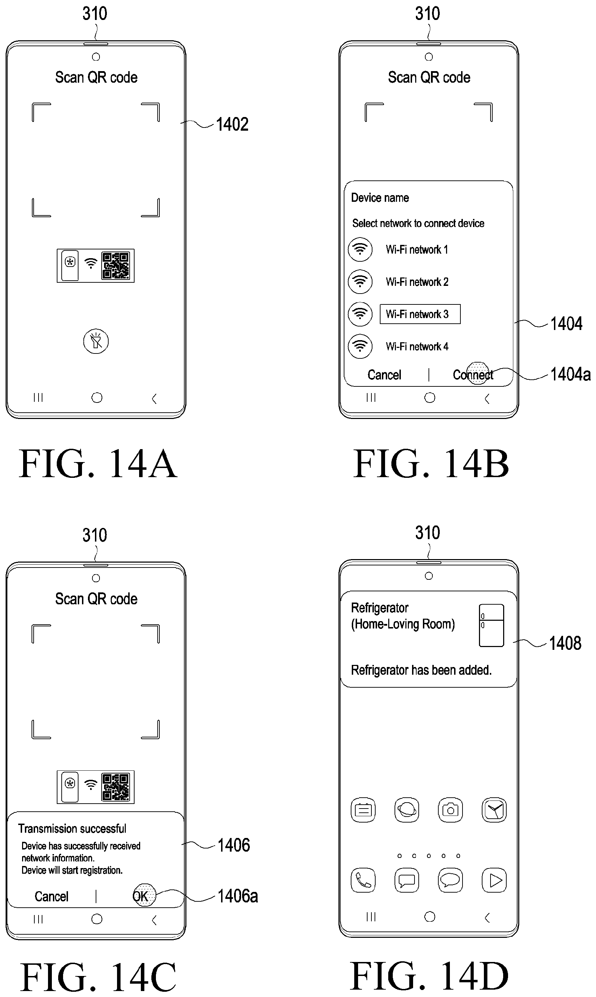

FIGS. 14A, 14B, 14C, and 14D are diagrams each illustrating a user interface for a procedure for adding an IoT device based on reception confirmation information according to an embodiment of the disclosure.

Referring to FIG. 14A, the electronic device 310 may display, via the display module 260, a QR scan screen 1402 for adding a device (e.g., the IoT device 320) to the IoT network. The electronic device 310 may proceed to FIG. 14B, based on a QR code related to the IoT device 320 being captured through the QR scan screen 1402.

Referring to FIG. 14B, the electronic device 310 may display a network selection window 1404, based on the QR code related to the IoT device 320 being captured through the QR scanning screen 1302. The network selection window 1404 may include selection objects for one or more Wi-Fi networks available for IoT services, for example, Wi-Fi network 1, Wi-Fi network 2, Wi-Fi network 3, and Wi-Fi network 4.

Based on receiving a user input 1404a for selecting one Wi-Fi network (e.g., Wi-Fi network 3) on the network selection window 1404, the electronic device 310 may broadcast a packet including device information obtained from the QR code of the IoT device 320 and encrypted connection information of the selected network according to at least one of the embodiments of the disclosure. The electronic device 310 may continue to broadcast the device information and the encrypted connection information until receiving reception confirmation information (e.g., an ACK) indicating that the device information and the encrypted connection information have been successfully received.

Referring to FIG. 14C, the electronic device 310 may display a transmission confirmation window 1406, based on receiving, from the IoT device 320, the reception confirmation information indicating that the device information and the encrypted connection information have been successfully received. The transmission confirmation window 1406 may include, for example, "The device has successfully received network information. The device will start registration." The electronic device 310 may stop, based on receiving the reception confirmation information, broadcasting of the encrypted connection information and the device information related to the IoT device 320. In an embodiment, the electronic device 310 may proceed to FIG. 14D, based on receiving a user input 1406a for confirming information transmission on the transmission confirmation window 1406.

Referring to FIG. 14D, the electronic device 310 may display an onboarding completion window 1408, based on receiving, from the server 350, an onboarding result indicating that the IoT device 320 has been successfully onboarded based on the connection information. For example, when the IoT device 320 is a refrigerator, the onboarding completion window 1206 may include "The refrigerator has been added." For example, the onboarding device window 1308 may be displayed while the electronic device 310 is broadcasting device information and encrypted connection information for another IoT device.

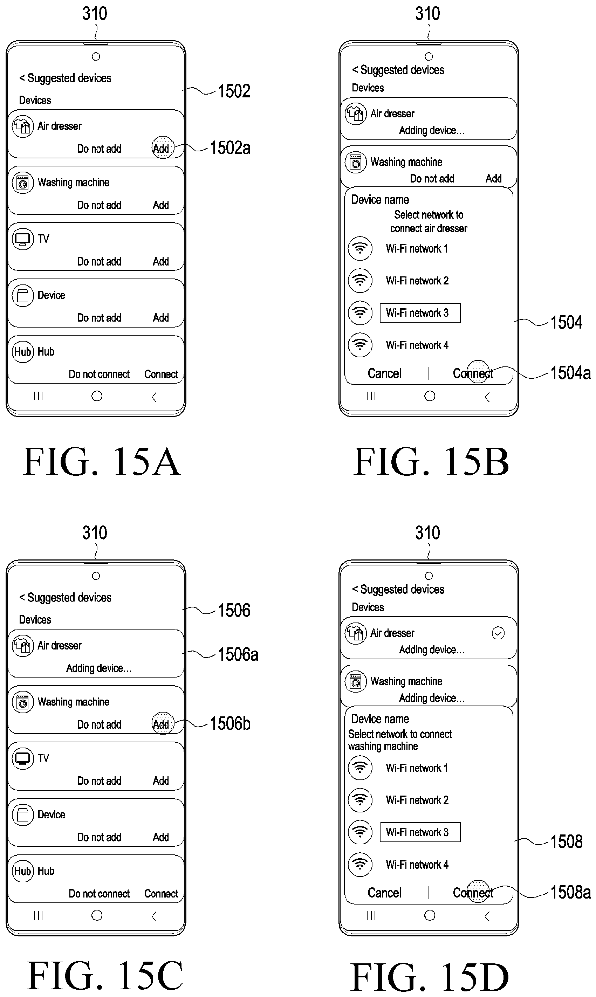

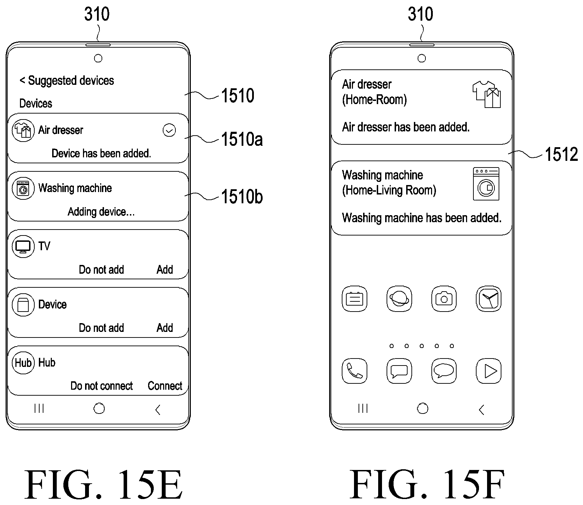

FIGS. 15A, 15B, 15C, 15D, 15E, and 15F are diagrams each illustrating a user interface for a procedure for adding multiple IoT devices according to an embodiment of the disclosure.

Referring to FIG. 15A, the electronic device 310 may display, via the display module 260, a suggested devices screen 1502 including items corresponding to IoT devices (e.g., an air dresser, a washing machine, and a TV) to be added. Based on receiving a user input 1502a (e.g., a touch on an object for "air dresser") for selecting one IoT device (e.g., an air dresser) on the suggested devices screen 1502, the electronic device 310 may proceed to FIG. 15B. In an embodiment, the electronic device 310 may receive a list of devices purchased or registered by a user from a server (e.g., the server 350 or a manufacturer server), and may identify, based on the received list, suggested IoT devices to be included in the suggested devices screen 1502. In an embodiment, the list may include device information of the suggested IoT devices.

Referring to FIG. 15B, the electronic device 310 may display a network selection window 1504 for an air dresser. In an embodiment, the network selection window 1504 may include selection objects for one or more Wi-Fi networks connectable to the air dresser, for example, Wi-Fi network 1, Wi-Fi network 2, Wi-Fi network 3, and Wi-Fi network 4. Based on receiving a user input 1504a for selecting one Wi-Fi network (e.g., Wi-Fi network 3) on the network selection window 1504, the electronic device 310 may broadcast a packet including device information of the air dresser obtained from the server and encrypted connection information of the selected network according to at least one of the embodiments of the disclosure. In an embodiment, the electronic device 310 may continue to broadcast the device information and the encrypted connection information until receiving reception confirmation information indicating that the device information and the encrypted connection information have been successfully received.

Referring to FIG. 15C, the electronic device 310 may display a suggested devices screen 1506 including information 1506a (e.g., "Adding a device...") about the air dresser being onboarded and items for other IoT devices to be added (e.g., a washing machine and a TV). Based on receiving a user input 1506b (e.g., a touch on an object for "washing machine") for selecting another IoT device (e.g., a washing machine) on the suggested devices screen 1506, the electronic device 310 may proceed to FIG. 15D.

Referring to FIG. 15D, the electronic device 310 may display a network selection window 1508 for a washing machine. In an embodiment, the network selection window 1508 may include selection objects for one or more Wi-Fi networks connectable to the washing machine, for example, Wi-Fi network 1, Wi-Fi network 2, Wi-Fi network 3, and Wi-Fi network 4. Based on receiving a user input 1508a for selecting one Wi-Fi network (e.g., Wi-Fi network 3) on the network selection window 1508, the electronic device 310 may broadcast a packet including device information of the washing machine obtained from the server and encrypted connection information of the selected network according to at least one of the embodiments of the disclosure. In an embodiment, the electronic device 310 may continue to broadcast the device information and the encrypted connection information until receiving the reception confirmation information indicating that the device information and the encrypted connection information have been successfully received.

Referring to FIG. 15E, based on receiving, from the server 350, an onboarding result indicating that the air dresser has been successfully onboarded, the electronic device 310 may display a suggested devices surface 1510 that includes information 1510a (e.g., "The device has been added.") about the air dresser that has completed onboarding, information 1510b (e.g., "Adding a device...") about the washing machine being onboarded, and items for IoT devices (e.g., TV) to be added. Based on receiving, from the server 350, an onboarding result indicating that the washing machine has been successfully onboarded while displaying the suggested devices screen 1510, the electronic device 310 may proceed to FIG. 15F.

In FIG. 15F, the electronic device 310 may display an onboarding completion screen 1512 including information (e.g., "The air dresser has been added." and "The washing machine has been added.") indicating that simultaneous onboarding of multiple IoT devices (e.g., the air dresser and the washing machine) has been successfully performed.

An electronic device 310 according to an embodiment of the disclosure may include a camera 410, a communication circuit 404, at least one processor 402 functionally connected to the camera and the communication circuit, and memory 406 configured to store instructions. The instructions, when executed individually or collectively by the at least one processor, may cause the electronic device to obtain a machine-readable code related to an external electronic device 320 via the camera. The instructions, when executed individually or collectively by the at least one processor, may cause the electronic device to determine whether the external electronic device supports a specified fast onboarding, based on device information of the external electronic device obtained based on the machine-readable code. The instructions, when executed individually or collectively by the at least one processor, may cause the electronic device to, when the external electronic device supports the fast onboarding, encrypt connection information used to connect the external electronic device to a network by using a specified encryption key to generate encrypted data. The instructions, when executed individually or collectively by the at least one processor, may cause the electronic device to broadcast, via the communication circuit, at least one packet including the device information and the encrypted data. The instructions, when executed individually or collectively by the at least one processor, may cause the electronic device to, when the external electronic device does not support the fast onboarding, operate the electronic device in a scan mode to receive an advertising (ADV) packet broadcast from the external electronic device.

In an embodiment, the instructions, when executed individually or collectively by the at least one processor, may cause the electronic device to broadcast the at least one packet by using a D2D communication technology supported by the external electronic device.

In an embodiment, the D2D communication technology may include at least one of Bluetooth, Bluetooth Low Energy (BLE), or Wi-Fi.

In an embodiment, the device information may include a serial number (SN) of the external electronic device, and the connection information may include a network name and a password of the network.

In an embodiment, the instructions, when executed individually or collectively by the at least one processor, may cause the electronic device to generate the encrypted data, based on a public key related to a specified private key, such that the external electronic device decrypts the encrypted data based on the private key.

In an embodiment, the instructions, when executed individually or collectively by the at least one processor, may cause the electronic device to, based on the external electronic device obtaining the device information and the connection information and being connected to the network through the connection information, receive, from a server, an onboarding result indicating that the external electronic device has been onboarded.

In an embodiment, the instructions, when executed individually or collectively by the at least one processor, may cause the electronic device to, after broadcasting the at least one packet, visually output a message that requests a user to confirm whether a beep sound has been output from the external electronic device.

In an embodiment, the instructions, when executed individually or collectively by the at least one processor, may cause the electronic device to, based on receiving a user input for identifying that the beep sound has been output from the external electronic device, stop the broadcasting of the at least one packet, determine whether an onboarding result indicating that the external electronic device has been onboarded is received from the server, and, when the onboarding result is not received within a predetermined time, resume the broadcasting of the packet.

An Internet of things (IoT) device 320 according to an embodiment may include a communication circuit 414, at least one processor 412 functionally connected to the communication circuit, and memory 416 configured to store instructions. The instructions, when executed individually or collectively by the at least one processor, may cause the IoT device to activate a device-to-device (D2D) function of the communication circuit. The instructions, when executed individually or collectively by the at least one processor, may cause the IoT device to, based on the D2D function being activated, receive at least one packet broadcast from an external electronic device 310 via the communication circuit in a scan mode. The instructions, when executed individually or collectively by the at least one processor, may cause the IoT device to determine whether device information included in the at least one packet matches device information of the IoT device. The instructions, when executed individually or collectively by the at least one processor, may cause the IoT device to, when the device information included in the at least one packet matches the device information of the IoT device, decrypt encrypted data included in the at least one packet by using a specified encryption key to obtain connection information. The instructions, when executed individually or collectively by the at least one processor, may cause the IoT device to perform an onboarding procedure for a server, based on the obtained connection information. The instructions, when executed individually or collectively by the at least one processor, may cause the IoT device to ignore the at least one ADV packet when the device information included in the at least one packet does not match the device information of the IoT device.

In an embodiment, the instructions, when executed individually or collectively by the at least one processor, may cause the IoT device to, when the device information included in the at least one packet matches the device information of the IoT device, output a notification indicating that onboarding is performed.

According to an embodiment, in a non-transitory computer-readable storage medium storing at least one program, the at least one program may include instructions configured to, when executed individually or collectively by at least one processor 402 of an electronic device 310, cause the electronic device to: obtain a machine-readable code related to an external electronic device 320 via a camera; determine whether the external electronic device supports a specified fast onboarding, based on device information of the external electronic device obtained based on the machine-readable code; when the external electronic device supports the fast onboarding, generate encrypted data by encrypting connection information used to connect the external electronic device to a network with a specified encryption key; broadcast at least one packet including the device information and the encrypted data; and when the external electronic device does not support the fast onboarding, operate in a scan mode to receive an advertising (ADV) packet broadcast from the external electronic device.

In an embodiment, the at least one program may include instructions configured to, when executed by the at least one processor, cause the electronic device to: broadcast the at least one packet by using a D2D communication technology supported by the external electronic device.

In an embodiment, the D2D communication technology may include at least one of Bluetooth, Bluetooth Low Energy (BLE), or Wi-Fi.

In an embodiment, the device information may include a serial number (SN) of the external electronic device, and the connection information may include a network name and a password of the network.

In an embodiment, the at least one program may include instructions configured to, when executed by the at least one processor, cause the electronic device to generate the encrypted data, based on a public key related to a specified private key, such that the external electronic device decrypts the encrypted data, based on the private key.

In an embodiment, the at least one program may include instructions configured to, when executed by the at least one processor, cause the electronic device to, based on the external electronic device obtaining the device information and the connection information and being connected to the network through the connection information, receive, from a server, an onboarding result indicating that the external electronic device has been onboarded.

In an embodiment, the at least one program may include instructions configured to, when executed by the at least one processor, cause the electronic device to, after broadcasting the at least one packet, visually output a message requesting confirmation of whether a beep sound has been output from the external electronic device.

In an embodiment, the at least one program may include instructions configured to, when executed by the at least one processor, cause the electronic device to: based on receiving a user input confirming that the beep sound has been output from the external electronic device, stop the broadcasting of the at least one packet, determine whether an onboarding result, which indicates that the external electronic device has been onboarded, is received from the server, and resume the broadcasting of the packet when the onboarding result is not received within a predetermined time.

According to an embodiment, in a non-transitory computer-readable storage medium storing at least one program, the at least one program may include instructions configured to, when executed individually or collectively by at least one processor 412 of an IoT device 320, cause the IoT device to: activate a device-to-device (D2D) function; based on the D2D function being activated, receive at least one packet broadcast from an external electronic device 310 in a scan mode; determine whether device information included in the at least one packet matches device information of the IoT device; when the device information included in the at least one packet matches the device information of the IoT device, decrypt encrypted data included in the at least one packet by using a specified encryption key to obtain connection information; perform an onboarding procedure for a server, based on the obtained connection information; and ignore the at least one ADV packet when the device information included in the at least one packet does not match the device information of the IoT device.

In an embodiment, the at least one program may include instructions configured to, when executed by the at least one processor, cause the IoT device to, when device information included in the at least one packet matches device information of the IoT device, output a notification indicating that onboarding is performed.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 240) including one or more instructions that are stored in a storage medium (e.g., internal memory 236 or external memory 238) that is readable by a machine (e.g., the electronic device 201). For example, a processor (e.g., the processor 220) of the machine (e.g., the electronic device 201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (310) comprising:
a camera (410);
communication circuitry (404);
at least one processor (402) functionally connected with the camera and the communication circuitry, and
memory storing instructions, wherein the instructions, when executed by the at least one processor individually or collectively, cause the electronic device to:
obtain a machine-readable code related to an external electronic device (320) through the camera,
based on device information of the external electronic device obtained based on the machine-readable code, determine whether the external electronic device supports a specified fast onboarding,
based on the external electronic device supporting the fast onboarding, encrypt connection information used by the external electronic device to connect to a network with a specified encryption key to generate encrypted data,
broadcast, through the communication circuitry, at least one packet containing the device information and the encrypted data,
based on the external electronic device not supporting the fast onboarding, operate the electronic device in a scan mode to receive an advertising (ADV) packet broadcasted from the external electronic device.

2. The electronic device of claim 1, wherein the instructions, when executed by the at least one processor individually or collectively, cause the electronic device to:
broadcast the at least one packet using a device-to-device (D2D) communication technology supportable by the external electronic device.

3. The electronic device of claim 2, wherein the device-to-device (D2D) communication technology comprises at least one of Bluetooth, Bluetooth Low Energy (BLE), or Wi-Fi.

4. The electronic device of any one of claims 1 to 3, wherein the device information includes a serial number (SN) of the external electronic device, and
wherein the connection information includes a network name and a password of the network.

5. The electronic device of any one of claims 1 to 4, wherein the instructions, when executed by the at least one processor individually or collectively, cause the electronic device to generate the encrypted data based on a public key associated with a specified private key, to cause the external electronic device to decrypt the encrypted data based on the private key.

6. The electronic device of any one of claims 1 to 5, wherein the instructions, when executed by the at least one processor individually or collectively, cause the electronic device to receive, from a server, a push notification indicating that the external electronic device is onboarded, based on the external electronic device obtaining the device information and the connection information and connecting to the network based on the connection information.

7. The electronic device of any one of claims 1 to 6, wherein the instructions, when executed by the at least one processor individually or collectively, cause the electronic device to:
after broadcasting the at least one packet, visually output a message requesting a user to confirm whether a beep sound is output at the external electronic device.

8. The electronic device of any one of claims 1 to 7, wherein the instructions, when executed by the at least one processor individually or collectively, cause the electronic device to:
stop broadcasting of the at least one packet based on receiving a user input confirming that a beep sound is output at the external electronic device,
determine whether an onboarding result indicating that the external electronic device is onboarded, is received from a server, and
based on the onboarding result being not received within a specified time, resume broadcasting of the packet.

9. An Internet of things (IoT) device (320) comprising:
a communication circuit (414);
at least one processor (412) functionally connected to the communication circuit; and
memory (416) configured to store instructions,
wherein the instructions, when executed by the at least one processor individually or collectively, cause the IoT device to:
activate a device-to-device (D2D) function of the communication circuit;
based on the D2D function being activated, receive at least one packet broadcast from an external electronic device (310) via the communication circuit in a scan mode;
determine whether device information included in the at least one packet matches device information of the IoT device;
in case that the device information included in the at least one packet matches the device information of the IoT device, decrypt encrypted data included in the at least one packet with a specified encryption key to obtain connection information;
based on the obtained connection information, perform an onboarding procedure for a server; and
in case that the device information included in the at least one packet does not match the device information of the IoT device, ignore at least one ADV packet.

10. The electronic device of claim 9, wherein the instructions, when executed by the at least one processor individually or collectively, cause the IoT device to, in case that the device information included in the at least one packet matches the device information of the IoT device, output a notification for indicating that onboarding is performed.

11. A non-transitory computer-readable storage medium storing at least one program, wherein the at least one program comprises instructions that, when executed by at least one processor (402) of an electronic device (310) individually or collectively, cause the electronic device to:
obtain a machine-readable code related to an external electronic device (320) via a camera;
based on device information of the external electronic device, obtained based on the machine-readable code, determine whether the external electronic device supports specified fast onboarding;
in case that the external electronic device supports the fast onboarding, encrypt connection information, which is used by the external electronic device for a connection to a network, with a specified encryption key to generate encrypted data;
broadcast at least one packet comprising the device information and the encrypted data; and
in case that the external electronic device does not support the fast onboarding, operate the electronic device in a scan mode to receive an advertising (ADV) packet broadcast from the external electronic device.

12. The storage medium of claim 11, wherein the at least one program comprises instructions that, when executed by the at least one processor, cause the electronic device to
broadcast the at least one packet by using a D2D communication technology supportable by the external electronic device,
wherein the D2D communication technology comprises at least one of Bluetooth, Bluetooth low energy (BLE), or Wi-Fi.

13. The storage medium of claim 11 or 12, wherein the device information comprises a serial number (SN) of the external electronic device, and
the connection information comprises a network name and a password of the network.

14. The storage medium of one of claims 11 to 13, wherein the at least one program comprises instructions that, when executed by the at least one processor, cause the electronic device to
generate the encrypted data, based on a public key related to a specified private key, so as to allow the external electronic device to decrypt the encrypted data, based on the private key.

15. A non-transitory computer-readable storage medium storing at least one program, wherein the at least one program comprises instructions that, when executed by at least one processor (412) of an IoT device (320) individually or collectively, cause the IoT device to:
activate a device-to-device (D2D) function of the IoT device;
based on the D2D function being activated, receive at least one packet broadcast from an external electronic device (310) in a scan mode;
determine whether device information included in the at least one packet matches device information of the IoT device;
in case that the device information included in the at least one packet matches the device information of the IoT device, decrypt encrypted data included in the at least one packet with a specified encryption key to obtain connection information;
based on the obtained connection information, perform an onboarding procedure for a server; and
in case that the device information included in the at least one packet does not match the device information of the IoT device, ignore at least one ADV packet.
